# FASCICULE DE BREVET EUROPEEN

(11) **EP 3 350 232 B1**
(45) Date de publication et mention de la délivrance du brevet: **07.06.2023**
(21) Numéro de dépôt: 16774975.3
(22) Date de dépôt: 15.09.2016
(51) Int. Cl.: C10L 10/06, C10L 1/236, C08F 293/00, C08F 8/32, C08F 8/44

(54) **COMPOSITION DE CARBURANT COMPRENANT UN COPOLYMERE BLOCS COMME ADDITIF DETERGENT**
KRAFTSTOFFZUSAMMENSETZUNG, DIE EIN BLOCKCOPOLYMER ALS DETERGENZZUSATZ ENTHÄLT
FUEL COMPOSITION COMPRISING A BLOCK COPOLYMER AS DETERGENT ADDITIVE

(30) Priorité: 18.09.2015 FR 1558831
(43) Date de publication de la demande: 25.07.2018
(73) Titulaire: TotalEnergies OneTech, 92400 Courbevoie (FR)
(72) Inventeur: PREVOST, Julie, 69005 Lyon (FR)
(74) Mandataire: Corizzi, Valérie
(86) Numéro de dépôt international: PCT/FR2016/052327
(87) Numéro de publication internationale: WO 2017/046526

(56) Documents cités:
- US-A- 4 755 563
- US-A- 5 011 504
- VIJAYAKRISHNA K ET AL: "Synthesis by RAFT and Ionic Responsiveness of Double Hydrophilic Block Copolymers Based on Ionic Liquid Monomer Units", MACROMOLECULES, AMERICAN CHEMICAL SOCIETY, US , vol. 41, no. 17 1 janvier 2008 (2008-01-01), pages 6299-6308, XP002671076, ISSN: 0024-9297, DOI: 10.1021/MA800677H Extrait de l'Internet: URL:http://pubs.acs.org/doi/abs/10.1021/ma 800677h [extrait le 2008-01-01]
- YIMEI JIA ET AL: "Use of quaternised methacrylate polymers and copolymers as catalysts and structure directors for the formation of silica from silicic acid", JOURNAL OF MATERIALS CHEMISTRY, vol. 15, no. 22, 1 janvier 2005 (2005-01-01), page 2202, XP055285780, GB ISSN: 0959-9428, DOI: 10.1039/b418372j
- BAINES F L ET AL: "SYNTHESIS AND SOLUTION PROPERTIES OF WATER-SOLUBLE HYDROPHILIC- HYDROPHOBIC BLOCK COPOLYMERS", MACROMOLECULES, AMERICAN CHEMICAL SOCIETY, US, vol. 29, no. 10, 6 mai 1996 (1996-05-06), pages 3416-3420, XP000583950, ISSN: 0024-9297, DOI: 10.1021/MA951699+

## Description

La présente invention concerne l'utilisation d'un copolymère à blocs comme additif détergent dans un carburant liquide de moteur à combustion interne. L'invention concerne également un procédé de maintien de la propreté et/ou de nettoyage d'au moins une des parties internes d'un moteur à combustion interne.

### ETAT DE L'ART ANTERIEUR

Les carburants liquides de moteurs à combustion interne contiennent des composants pouvant se dégrader au cours du fonctionnement du moteur. La problématique des dépôts dans les parties internes des moteurs à combustion est bien connue des motoristes. Il a été montré que la formation de ces dépôts a des conséquences sur les performances du moteur et notamment a un impact négatif sur la consommation et les émissions de particules. Les progrès de la technologie des additifs de carburant ont permis de faire face à cette problématique. Des additifs dits détergents utilisés dans les carburants ont déjà été proposés pour maintenir la propreté du moteur en limitant les dépôts (effet « Keep-clean » en anglais) ou en réduisant les dépôts déjà présents dans les parties internes du moteur à combustion (effet « clean-up » en anglais). On peut citer à titre d'exemple le document US4171959 qui décrit un additif détergent pour carburant essence contenant une fonction ammonium quaternaire. Le document WO2006135881 décrit un additif détergent contenant un sel d'ammonium quaternaire utilisé pour réduire ou nettoyer les dépôts notamment sur les soupapes d'admission. Néanmoins, la technologie des moteurs évolue sans cesse et les exigences sur les carburants doivent évoluer pour faire face à ces avancées technologiques des moteurs à combustion. En particulier, les nouveaux systèmes d'injection directe essence ou Diesel exposent les injecteurs à des conditions plus sévères en pression et température ce qui favorise la formation de dépôts. En outre, ces nouveaux systèmes d'injection présentent des géométries plus complexes pour optimiser la pulvérisation, notamment, des trous plus nombreux ayant des diamètres plus petits mais qui, en revanche, induisent une plus grande sensibilité aux dépôts. La présence de dépôts peut altérer les performances de la combustion notamment augmenter les émissions polluantes et les émissions de particules. D'autres conséquences de la présence excessive de dépôts ont été rapportées dans la littérature, telles que l'augmentation de la consommation de carburant et les problèmes de maniabilité.

La prévention et la réduction des dépôts dans ces nouveaux moteurs sont essentielles pour un fonctionnement optimal des moteurs d'aujourd'hui. Il existe donc un besoin de proposer des additifs détergents pour carburant favorisant un fonctionnement optimal des moteurs à combustion, notamment, pour les nouvelles technologies moteur.

Il existe également un besoin d'un additif détergent universel capable d'agir sur les dépôts quelque soit la technologie du moteur et/ou la nature du carburant.

### OBJET DE L'INVENTION

L'objet selon l'invention concerne de nouvelles compositions de carburant comprenant des copolymères à blocs.

La demanderesse a découvert que les copolymères à blocs utilisés selon l'invention ont des propriétés remarquables comme additif détergent dans les carburants liquides de moteur à combustion interne. Les copolymères à blocs utilisés selon l'invention dans ces carburants permettent de maintenir la propreté du moteur, en particulier, en limitant ou évitant la formation les dépôts (effet « Keep-clean » en anglais) ou en réduisant les dépôts déjà présents dans les parties internes du moteur à combustion (effet « clean-up » en anglais).

Les avantages associés à l'utilisation, selon l'invention, de tels copolymères sont :
- un fonctionnement optimal du moteur,
- une réduction de la consommation de carburant,
- une meilleure maniabilité du véhicule,
- des émissions de polluants réduites, et
- une économie due à moins d'entretien du moteur.

L'objet de la présente invention concerne une composition de carburant comprenant :
(1) un carburant issu d'une ou de plusieurs sources choisies parmi le groupe consistant en les sources minérales, animales, végétales et synthétiques, et
(2) un ou plusieurs copolymères à blocs comprenant :
   - au moins un bloc **A** de formule (I) suivante : 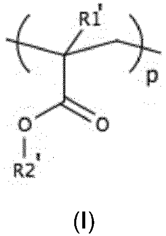 dans laquelle
      p est un entier allant de 2 à 100,
      R₁^{'} est choisi parmi l'hydrogène et le groupement méthyle,
      R'₂ est choisi parmi les chaines hydrocarbonées en C₁ à C₃₄,
   - au moins un bloc **B** de formule (II) suivante : 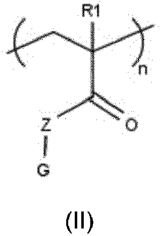 dans laquelle
      n est un entier allant de 2 à 40,
      R₁ est choisi parmi l'hydrogène et le groupement méthyle,
      Z est choisi parmi l'atome d'oxygène et le groupement -NR'- avec R' étant choisi parmi un atome d'hydrogène et les chaines hydrocarbonées en C₁ à C₁₂,
      G est une chaine hydrocarbonée en C₁ à C₃₄ substituée par au moins un groupement ammonium quaternaire et éventuellement un ou plusieurs groupements hydroxyle.

Selon un premier mode de réalisation, p est un entier allant de 2 à 40.

Selon une autre variante, p est un entier supérieur à 40 et inférieur ou égal à 100.

Selon un mode de réalisation préféré, R'₂ est choisi parmi les chaines hydrocarbonées en C₄ à C₃₀.

Selon un mode de réalisation préféré, le copolymère a une masse molaire moyenne en nombre (Mn) allant de 1000 à 10 000 g.mol⁻¹.

Selon un mode de réalisation particulier, le copolymère à blocs comprend :
- le bloc **A** consiste en une chaine de motifs structuraux dérivés d'un monomère (méth)acrylate d'alkyle (mₐ), et
- le bloc **B** consiste en une chaine de motifs structuraux dérivés d'un monomère (méth)acrylate d'alkyle ou (méth)acrylamide d'alkyle (m_{b}), dont le radical alkyle est constitué par une chaine hydrocarbonée en C₁ à C₃₄ substituée par au moins un groupement ammonium quaternaire et éventuellement un ou plusieurs groupements hydroxyle.

Avantageusement, le monomère (mₐ) est choisi parmi les acrylates d'alkyle en C₁ à C₃₄ et méthacrylates d'alkyle en C₁ à C₃₄.

Encore plus avantageusement, le monomère (mₐ) est choisi parmi les acrylates d'alkyle en C₄ à C₃₄ et les méthacrylates d'alkyle en C₄ à C₃₄.

De façon encore préférée, le monomère (mₐ) est choisi parmi les acrylates d'alkyle en C₄ à C₃₀ et les méthacrylates d'alkyle en C₄ à C₃₀.

Selon un mode de réalisation particulier, le monomère (mₐ) est choisi parmi les acrylates d'alkyle en C₄ à C₃₄ et les méthacrylates d'alkyle en C₄ à C₃₄ et le copolymère a une masse molaire moyenne en nombre (Mn) allant de 1000 à 10 000 g.mol⁻¹.

Selon un mode de réalisation particulier, le radical alkyle du monomère (m_{b}) est substitué par au moins un groupement ammonium quaternaire et un ou plusieurs groupements hydroxyle.

Avantageusement, le groupement ammonium quaternaire est choisi parmi les sels quaternaires de pyrrolinium, de pyridinium, d'imidazolium, de triazolium, de triazinium, d'oxazolium et d'isoxazolium.

Selon une variante, le groupement ammonium quaternaire est choisi parmi les sels de trialkylammonium, de guanidinium et d'iminium quaternaires.

Selon un mode de réalisation particulier préféré, le bloc **B** est représenté par l'une des formules (III) et (IV) suivantes : 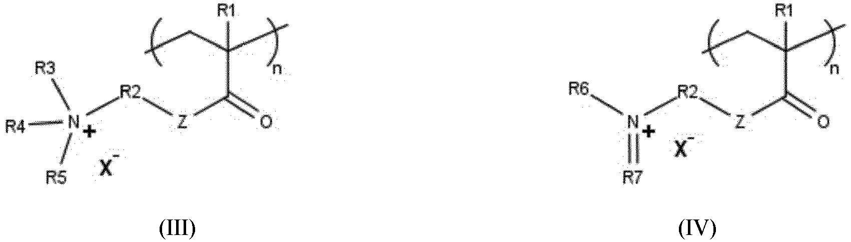 dans laquelle
n, Z et R₁ sont tels que définis dans la formule (II) ci-dessus,
X⁻ est choisi parmi les ions hydroxyde, halogénures et les anions organiques,
R₂ est choisi parmi les chaines hydrocarbonées en C₁ à C₃₄, éventuellement substituées par au moins un groupement hydroxyle,
R₃, R₄ et R₅ sont identiques ou différents et choisis, indépendamment, parmi les chaines hydrocarbonées en C₁ à C₁₈, étant entendu que les groupements alkyles R₃, R₄ et R₅ peuvent contenir un ou plusieurs groupements choisis parmi : un atome d'azote, un atome d'oxygène et un groupement carbonyle et que les groupements R₃, R₄ et R₅ peuvent être reliés ensemble deux à deux pour former un ou plusieurs cycles,
R₆ et R₇ sont identiques ou différents et choisis indépendamment parmi les chaines hydrocarbonées en C₁ à C₁₈, étant entendu que les groupements R₆ et R₇ peuvent contenir un ou plusieurs groupements choisis parmi : un atome d'azote, un atome d'oxygène et un groupement carbonyle et que les groupements R₆ et R₇ peuvent être reliés ensemble pour former un cycle.

Avantageusement, le groupement R₂ est représenté par l'une des formules (V) et (VI) suivantes : 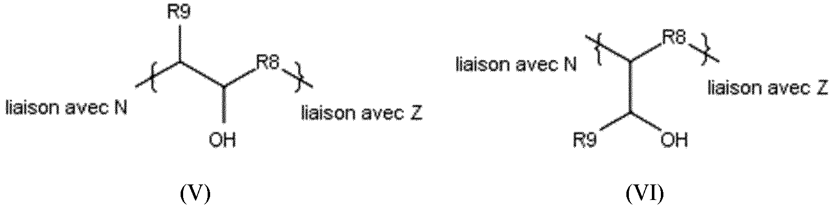 Dans laquelle
R₈ est choisi parmi les chaines hydrocarbonées en C₁ à C₃₂,
R₉ est choisi parmi l'hydrogène et les groupements alkyle en C₁ à C₆.

Selon un mode de réalisation particulier, le bloc **B** de formule (III), (IV), (V) ou (VI) est dérivé d'un monomère (m_{b}) obtenu par réaction :
- d'une amine tertiaire de formule NR₃R₄R₅ ou R₆N=R₇ dans laquelle R₃, R₄, R₅, R₆ et R₇ sont tels que définis dans les formules (II), (III) et (IV) ci-dessus, et
- d'un monomère intermédiaire (méth)acrylate ou (méth)acrylamide (mᵢ) de formule (VII) suivante : 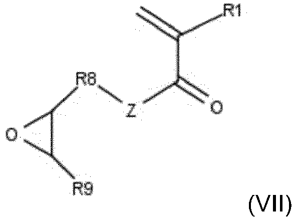 Dans laquelle,
   Z, R₁, R₈ et R₉ sont tels que définis dans les formules (II), (V) et (VI) ci-dessus.

Selon un autre mode de réalisation particulier, le bloc **B** est obtenu par post-fonctionnalisation d'un polymère intermédiaire P*i* comprenant au moins un bloc **P** de formule (VIII) suivante : 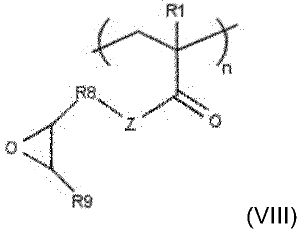 Dans laquelle,
n, Z, R₁, R₈ et R₉ sont tels que définis dans les formules (II), (V) et (VI) ci-dessus,
et dans lequel ladite post-fonctionnalisation correspond à la réaction dudit polymère intermédiaire P*i* avec une amine tertiaire NR₃R₄R₅ où R₆N=R₇ où R₃, R₄, R₅, R₆ et R₇ sont tels que définis ci-dessus dans les formules (III) et (IV).

Avantageusement, le polymère intermédiaire P*i* comprend également au moins un bloc **A** tel que défini dans ci-dessus.

Selon un mode de réalisation particulier, le copolymère à blocs est obtenu par polymérisation séquencée, éventuellement suivie d'une ou plusieurs post-fonctionnalisations.

Selon un mode de réalisation particulier, le copolymère est un copolymère comprenant au moins une séquence de blocs **AB, ABA** ou **BAB** où lesdits blocs **A** et **B** s'enchainent sans présence de bloc intermédiaire de nature chimique différente.

L'objet de la présente invention concerne également un concentré pour carburant comprenant un ou plusieurs copolymères à blocs tels que décrits ci-dessus, en mélange avec un liquide organique, ledit liquide organique étant inerte vis-à-vis du ou des copolymères à blocs et miscible audit carburant et au moins un autre additif pour carburant de moteur à combustion interne.

Avantageusement, la composition de carburant comprend au moins 5ppm de copolymère(s) à blocs (2).

Selon un mode de réalisation particulier, le carburant (1) est choisi parmi les carburants hydrocarbonés, les carburants non essentiellement hydrocarbonés et leurs mélanges.

L'objet de la présente invention concerne également une utilisation d'un ou de plusieurs copolymères à blocs tels que définis ci-dessus, comme additif détergent dans un carburant liquide de moteurs à combustion interne, ledit copolymère étant utilisé seul, en mélange ou sous forme d'un concentré tel que définis ci-dessus.

Selon un mode de réalisation particulier, le copolymère est utilisé dans le carburant liquide pour maintenir la propreté et/ou nettoyer au moins une des parties internes dudit moteur à combustion interne.

Selon un mode de réalisation particulier préféré, le copolymère est utilisé dans le carburant liquide pour limiter ou éviter la formation de dépôts dans au moins une des parties internes dudit moteur et/ou réduire les dépôts existant dans au moins une des parties internes dudit moteur.

Selon un mode de réalisation particulier, le copolymère est utilisé pour réduire la consommation de carburant du moteur à combustion interne.

Selon un mode de réalisation particulier, le copolymère est utilisé pour réduire les émissions de polluants, en particulier, les émissions de particules du moteur à combustion interne.

Selon un mode de réalisation particulier, le moteur à combustion interne est un moteur à allumage commandé.

Avantageusement, les dépôts sont localisés dans au moins une des parties internes choisie parmi le système d'admission du moteur, la chambre de combustion et le système d'injection de carburant.

Selon un autre mode de réalisation particulier, le moteur à combustion interne est un moteur Diesel, de préférence un moteur Diesel à injection directe.

Avantageusement, le copolymère est utilisé pour éviter et/ou réduire la formation de dépôts dans le système d'injection du moteur Diesel.

En particulier, le copolymère est utilisé pour éviter et/ou réduire la formation de dépôts liés au phénomène de cokage et/ou les dépôts de type savon et/ou vernis.

Selon un mode de réalisation particulier, le copolymère est utilisé pour réduire et/ou éviter la perte de puissance due à la formation desdits dépôts dans les parties internes d'un moteur Diesel à injection directe, ladite perte de puissance étant déterminée selon la méthode d'essai moteur normée CEC F-98-08.

Selon un mode de réalisation particulier, le copolymère est utilisé pour réduire et/ou éviter la restriction du flux de carburant émis par l'injecteur au cours du fonctionnement dudit moteur Diesel, ladite restriction de flux étant déterminée selon la méthode d'essai moteur normée CEC F-23-1-01.

### DESCRIPTION DETAILLEE

D'autres avantages et caractéristiques ressortiront plus clairement de la description qui va suivre. Les modes particuliers de réalisation de l'invention sont donnés à titre d'exemples non limitatifs.

Selon un mode de réalisation particulier, un copolymère à blocs comprend au moins un bloc **A** et au moins un bloc **B.**

Le bloc **A** est représenté par la formule (I) suivante : 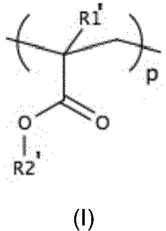 dans laquelle
p est un entier allant de 2 à 100, de préférence de 2 à 40, de préférence de 3 à 30, plus préférentiellement de 4 à 20, encore plus préférentiellement de 5 à 10,
R₁^{'} est choisi parmi l'hydrogène et le groupement méthyle, de préférence méthyle,
R'₂ est choisi parmi les chaines hydrocarbonées en C₁ à C₃₄, de préférence en C₄ à C₃₀, plus préférentiellement en C₆ à C₂₄, encore plus préférentiellement en C₈ à C₂₂, lesdites chaines étant linéaires ou ramifiées, cycliques ou acycliques, de préférence acycliques. On préférera les groupements alkyles.

Selon un mode de réalisation préféré, p est un entier allant de 2 à 40, et R'₂ est choisi parmi les chaines hydrocarbonées en C₄ à C₃₀.

Selon un mode de réalisation préféré, p est un entier allant de 2 à 40, R'₂ est choisi parmi les chaines hydrocarbonées en C₄ à C₃₀, et le copolymère a une masse molaire moyenne en nombre (Mn) allant de 1000 à 10 000 g.mol⁻¹.

On entend par chaine hydrocarbonée, une chaine constituée exclusivement d'atomes de carbone et d'hydrogène, ladite chaine pouvant être linéaire ou ramifiée, cyclique, polycyclique ou acyclique, saturée ou insaturée, et éventuellement aromatique ou polyaromatique. Une chaine hydrocarbonée peut comprendre une partie linéaire ou ramifiée et une partie cyclique. Elle peut comprendre une partie aliphatique et une partie aromatique.

Selon une variante, p est un entier supérieur à 40 et inférieur ou égal à 100, de préférence supérieur à 40 et inférieur ou égal à 80, encore plus préférentiellement de 41 à 70, encore plus préférentiellement de 41 à 50.

Selon un mode de réalisation préféré de cette variante, p est un entier supérieur à 40 et inférieur ou égal à 100, et R'₂ est choisi parmi les chaines hydrocarbonées en C₄ à C₃₀.

Le bloc **B** est représenté par la formule (II) suivante : 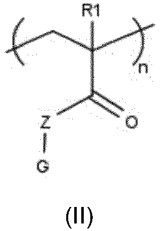 dans laquelle
n est un entier allant de 2 à 40, de préférence de 3 à 30, plus préférentiellement de 4 à 20, encore plus préférentiellement de 5 à 10,
R₁ est choisi parmi l'hydrogène et le groupement méthyle,
Z est choisi parmi l'atome d'oxygène et le groupement -NR'- avec R' étant choisi parmi un atome d'hydrogène et les chaines hydrocarbonées en C₁ à C₁₂, de préférence en C₁ à C₆, lesdites chaines étant linéaires ou ramifiées, cycliques ou acycliques, de préférence acycliques. Z est de préférence choisi parmi l'atome d'oxygène et le groupement -NH-. G est une chaine hydrocarbonée en C₁ à C₃₄, de préférence en C₁ à C₁₈, plus préférentiellement en C₁ à C₁₀, linéaire ou ramifiée, cyclique ou acyclique, de préférence acyclique, substituée par au moins un groupement ammonium quaternaire de préférence ayant de 4 à 50 atomes et éventuellement un ou plusieurs groupements hydroxyle.

Selon un mode de réalisation particulier préféré, Z est l'atome d'oxygène.

Selon un mode de réalisation particulier, le groupement G comprend le groupement ammonium quaternaire et un ou plusieurs groupements hydroxyle.

Selon un mode de réalisation particulier, le bloc **B** est représenté par l'une des formules (III) et (IV) suivantes : 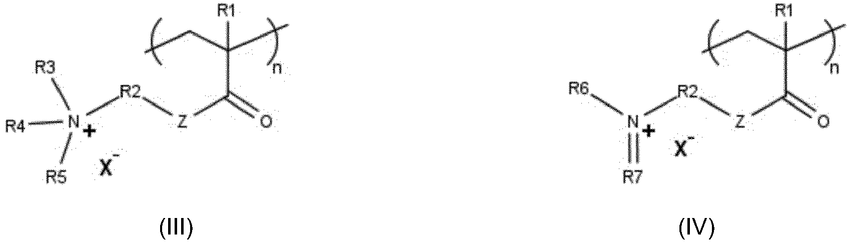 dans laquelle
n, Z et R₁ sont tels que décrits ci-dessus,
X⁻ est choisi parmi les ions hydroxyde, halogénures et les anions organiques, en particulier l'ion acétate,
R₂ est choisi parmi les chaines hydrocarbonées en C₁ à C₃₄, de préférence en C₁ à C₁₈, cycliques ou acycliques, linéaires ou ramifiées, éventuellement substituées par au moins un groupement hydroxyle ; de préférence R₂ est choisi parmi les groupements alkyles, éventuellement substitués par au moins un groupement hydroxyle,
R₃, R₄ et R₅ sont identiques ou différents et choisis, indépendamment, parmi les chaines hydrocarbonées en C₁ à C₁₈, de préférence en C₁ à C₁₂, linéaires ou ramifiées, cycliques ou acycliques, étant entendu que les groupements alkyles R₃, R₄ et R₅ peuvent contenir un ou plusieurs atomes d'azote et/ou d'oxygène et/ou groupements carbonyle et peuvent être reliés ensemble deux à deux pour former un ou plusieurs cycles,
R₆ et R₇ sont identiques ou différents et choisis indépendamment parmi les chaines hydrocarbonées en C₁ à C₁₈, de préférence en C₁ à C₁₂, linéaires ou ramifiées, cycliques ou acycliques, étant entendu que les groupements R₆ et R₇ peuvent contenir un ou plusieurs atomes d'azote et/ou d'oxygène et/ou groupements carbonyle et peuvent être reliés ensemble pour former un cycle.

Le ou les atomes d'azote et/ou d'oxygène peuvent être présents dans les groupements R₃, R₄ et R₅ sous forme de ponts éther, de pont amine ou sous forme d'un substituant amine ou hydroxyle.

Les anions organiques du groupement X⁻ sont généralement les bases conjuguées des acides organiques, de préférence les bases conjuguées des acides carboxyliques, en particulier les acides choisis parmi les acides monocarboxyliques, polycarboxyliques, cycliques ou acycliques. De préférence les anions organiques du groupement X⁻ sont choisis parmi les bases conjuguées des acides carboxyliques acycliques saturés ou cycliques aromatiques. On citera à titre d'exemple l'acide méthanoïque, l'acide acétique, l'acide adipique, l'acide oxalique, l'acide malonique, l'acide succinique, l'acide citrique, l'acide benzoïque, l'acide phtalique, l'acide isophtalique et l'acide téréphtalique.

Selon un mode de réalisation particulier, le groupement R₂ est choisi parmi les groupements alkyles acycliques en C₁ à C₃₄, de préférence en C₁ à C₁₈, linéaires ou ramifiés, substitués par au moins un groupement hydroxyle.

Selon un mode de réalisation particulier, le groupement R₂ est représenté par l'une des formules (V) et (VI) suivantes : 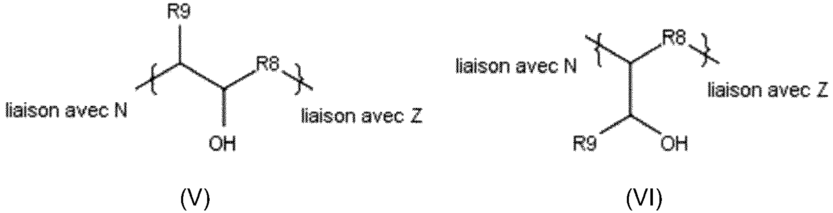 Dans laquelle
R₈ est choisi parmi les chaines hydrocarbonées en C₁ à C₃₂, de préférence en C₁ à C₁₆, cycliques ou acycliques, de préférence acyclique, linéaires ou ramifiées, de préférence les groupements alkyles,
R₉ est choisi parmi l'hydrogène et les groupements alkyle en C₁ à C₆, en C₁ à C₄, plus préférentiellement l'hydrogène.

Selon un mode de réalisation particulier, le bloc A consiste en une chaine de motifs structuraux dérivés d'un monomère acrylate d'alkyle ou méthacrylate d'alkyle mₐ et le bloc **B** consiste en une chaine de motifs structuraux dérivés d'un monomère acrylate d'alkyle, méthacrylate d'alkyle, acrylamide d'alkyle ou méthacrylamide d'alkyle m_{b}, dont le radical alkyle est constitué par une chaine hydrocarbonée saturée en C₁ à C₃₄, de préférence en C₁ à C₁₈, linéaire ou ramifié, de préférence acyclique, substituée par au moins un groupement ammonium quaternaire et éventuellement un ou plusieurs groupement hydroxyle.

Pour des raisons de simplification, nous utiliserons dans la suite de la description les termes (méth)acrylate d'alkyle et (méth)acrylamide d'alkyle pour indiquer acrylate d'alkyle ou méthacrylate d'alkyle ((méth)acrylate d'alkyle) et acrylamide d'alkyle ou méthacrylamide d'alkyle ((méth)acrylamide d'alkyle).

Le copolymère à blocs peut être préparé selon tout procédé connu de polymérisation. Les différentes techniques et conditions de polymérisation sont largement décrites dans la littérature et relèvent des connaissances générales de l'homme de l'art.

Selon un mode de réalisation particulier, le copolymère à blocs est obtenu par copolymérisation d'au moins le monomère (méth)acrylate d'alkyle mₐ et d'au moins le monomère m_{b}.

Le monomère mₐ est, de préférence, choisi parmi les acrylates ou méthacrylates d'alkyle en C₁ à C₃₄, de préférence en C₄ à C₃₀, plus préférentiellement en C₆ à C₂₄, plus préférentiellement en C₈ à C₂₂. Le radical alkyle de l'acrylate ou méthacrylate est linéaire ou ramifié, cyclique ou acyclique, de préférence acyclique.

Parmi les (méth)acrylates d'alkyle susceptibles d'être utilisés dans la fabrication du copolymère à blocs de l'invention, on peut citer, de façon non limitative : l'acrylate de n-octyle, le méthacrylate de n-octyle, l'acrylate de n-décyle, le méthacrylate de n-décyle, l'acrylate de n-dodécyle, le méthacrylate de n-dodécyle, l'acrylate d'éthyl-2-hexyle, le méthacrylate d'éthyl-2-hexyle, l'acrylate d'isooctyle, le méthacrylate d'isooctyle, l'acrylate d'isodécyle, le méthacrylate d'isodécyle.

Selon un mode de réalisation particulier, le radical alkyle du monomère m_{b} est substitué par au moins un groupement ammonium quaternaire et un ou plusieurs groupements hydroxyle.

Il est entendu que l'on ne sortirait pas de l'invention si l'on obtenait le copolymère utilisé selon l'invention à partir de monomères différents de mₐ et m_{b}, dans la mesure où le copolymère final correspond à celui de l'invention c'est-à-dire obtenu par copolymérisation d'au moins mₐ et m_{b}. Par exemple, on ne sortirait pas de l'invention, si on obtenait le copolymère par copolymérisation de monomères différents de mₐ et m_{b} suivie d'une post-fonctionnalisation.

Par exemple, les unités dérivant d'un monomère (méth)acrylate d'alkyle mₐ peuvent être obtenues à partir d'un fragment poly(méth)acrylate de méthyle, par réaction de transestérification à l'aide d'un alcool de longueur de chaine choisie pour former le groupement alkyle attendu.

Un exemple de post-fonctionnalisation des monomères m_{b} est illustré ci-dessous.

Le copolymère à blocs peut être obtenu par polymérisation séquencée, de préférence par polymérisation séquencée et contrôlée et, éventuellement suivie d'une ou plusieurs post-fonctionnalisations.

Selon un mode de réalisation particulier, le copolymère à blocs décrit ci-dessus est obtenu par polymérisation séquencée et contrôlée. La polymérisation est, avantageusement, choisie parmi la polymérisation radicalaire contrôlée ; par exemple, par polymérisation radicalaire par transfert d'atome (ATRP en anglais « Atom Transfer Radical Polymerization») ; la polymérisation radicalaire par le nitroxyde (NMP en anglais « Nitroxide-mediated polymerization ») ; les procédés de transfert dégénératif (en anglais « degenerative transfer processes ») tels que la polymérisation par transfert d'iode dégénérative (en anglais « ITRP- iodine transfer radical polymerization ») ou la polymérisation radicalaire par transfert de chaîne réversible par addition-fragmentation (RAFT en anglais « Réversible Addition-Fragmentation Chain Transfer) ; les polymérisations dérivées de l'ATRP telles que les polymérisations utilisant des initiateurs pour la régénération continue de l'activateur (ICAR -Initiators for continuous activator régénération) ou utilisant des activateurs régénérés par transfert d'électron (ARGET en anglais « activators regenerated by electron transfer »).

On citera, à titre d'exemple, la publication « Macromolecular Engineering by atom transfer radical polymerization », JACS, 136, 6513-6533 (2014) qui décrit un procédé de polymérisation séquencée et contrôlée pour former des copolymères à blocs.

La polymérisation séquencée et contrôlée est typiquement réalisée dans un solvant, sous atmosphère inerte, à une température de réaction allant en général de 0 à 200°C, de préférence de 50°C à 130°C. Le solvant peut être choisi parmi les solvants polaires, en particulier les éthers comme l'anisole (méthoxybenzène) ou le tétrahydrofuranne ou les solvants apolaires, en particulier, les paraffines, les cycloparaffines, les aromatiques et les alkylaromatiques ayant de 1 à 19 atomes de carbone, par exemple, le benzène, le toluène, le cyclohexane, le méthylcyclohexane, le n-butène, le n-hexane, le n-heptane et similaire.

Pour la polymérisation radicalaire par transfert d'atome (ATRP en anglais «Atom Transfer Radical Polymerization»), la réaction est généralement réalisée sous vide en présence d'un amorceur, d'un ligand et d'un catalyseur. A titre d'exemple de ligand, on peut citer la N,N,N',N",N"-Pentaméthyldiéthylenetriamine (PMDETA), la 1,1,4,7,10,10-hexaméthyltriéthylène-tétramine (HMTETA), la 2,2'-Bipyridine (BPY) et la Tris(2-pyridylmethyl)amine (TPMA). A titre d'exemple de catalyseur, on peut citer : CuX, CuX₂, avec X=Cl, Br et les complexes à base de ruthénium Ru²⁺/Ru³⁺.

La polymérisation ATRP est, de préférence, réalisée dans un solvant choisi parmi les solvants polaires.

Selon la technique de polymérisation séquencée et contrôlée, il peut également être envisagé de travailler sous pression.

Selon un mode de réalisation particulier, les nombres d'équivalents de monomère mₐ du bloc **A** et de monomère m_{b} du bloc **B** mis en réaction lors de la réaction de polymérisation sont identiques ou différents et, ont une valeur allant, indépendamment, de 2 à 40, de préférence de 3 à 30, plus préférentiellement de 4 à 20, encore plus préférentiellement de 5 à 10. On entend par nombre d'équivalents, les quantités de matière (en moles) des monomères mₐ du bloc **A** et des monomères m_{b} du bloc **B**, lors de la réaction de polymérisation.

Le nombre d'équivalents de monomère mₐ du bloc **A** est, avantageusement, supérieur ou égal à celui du monomère m_{b} du bloc **B.** En outre, la masse molaire en poids M_{w} du bloc **A** ou du bloc **B** est, de préférence, inférieure ou égale à 15 000 g.mol.⁻¹, plus préférentiellement inférieure ou égale à 10 000 g.mol.⁻¹

Le copolymère à blocs comprend avantageusement au moins une séquence de blocs **AB, ABA** ou **BAB** où lesdits blocs **A** et **B** s'enchainent sans présence de bloc intermédiaire de nature chimique différente.

D'autres blocs peuvent éventuellement être présents dans le copolymère à blocs décrit précédemment dans la mesure où ces blocs ne changent pas fondamentalement le caractère du copolymère à blocs. On privilégiera néanmoins les copolymères à blocs contenant uniquement des blocs **A** et **B.**

Avantageusement, **A** et **B** représentent au moins 70% massique, de préférence au moins 90% massique, plus préférentiellement au moins 95% massique, encore plus préférentiellement au moins 99% massique du copolymère à blocs.

Selon un mode de réalisation particulier, le copolymère à blocs est un copolymère diséquencé.

Selon un autre mode de réalisation particulier, le copolymère à blocs est un copolymère triséquencé à blocs alternés comprenant deux blocs **A** et un bloc **B (ABA)** ou comprenant deux blocs **B** et un bloc **A (BAB).**

Selon un mode de réalisation particulier, le copolymère à blocs comprend également une chaine terminale **I** consistant en une chaine hydrocarbonée, cyclique ou acyclique, saturée ou insaturée, linéaire ou ramifiée, en C₁ à C₃₂, de préférence en C₄ à C₂₄, plus préférentiellement en C₁₀ à C₂₄.

On entend par chaine hydrocarbonée cyclique, une chaine hydrocarbonée dont au moins une partie est cyclique, notamment aromatique. Cette définition n'exclut pas les chaines hydrocarbonées comprenant à la fois une partie acyclique et une partie cyclique.

La chaine terminale **I** peut comprendre une chaine hydrocarbonée aromatique, par exemple benzénique et/ou une chaine hydrocarbonée, saturée et acyclique, linéaire ou ramifiée, en particulier une chaine alkyle.

La chaine terminale **I** est, de préférence, choisie parmi les chaines alkyles, de préférence linéaires, plus préférentiellement les chaines alkyles d'au moins 4 atomes de carbone, encore plus préférentiellement d'au moins 12 atomes de carbone.

Pour la polymérisation ATRP, la chaine terminale **I** est située en position terminale du copolymère à blocs. Elle peut être introduite dans le copolymère à blocs grâce à l'amorceur de polymérisation. Ainsi, la chaine terminale **I** peut, avantageusement, constituer au moins une partie de l'amorceur de polymérisation et est positionnée au sein de l'amorceur de polymérisation afin de permettre d'introduire, lors de la première étape d'amorçage de la polymérisation, la chaine terminale **I** en position terminale du copolymère à blocs.

L'amorceur de polymérisation est, par exemple, choisi parmi les amorceurs de radicaux libres mis en oeuvre dans le procédé de polymérisation ATRP. Ces amorceurs de radicaux libres bien connus de l'homme du métier sont notamment décrits dans l'article « Atom Transfer Radical Polymerization : current status and future perspectives, Macromolecules, 45, 4015-4039, 2012 ».

L'amorceur de polymérisation est, par exemple, choisi parmi les esters d'alkyle d'acide carboxylique substitué par un halogénure, de préférence, un brome en position alpha, par exemple, le 2-bromopropionate d'éthyle, le α-bromoisobutyrate d'éthyle, le chorure ou bromure de benzyle, le α-bromophénylacetate d'éthyle et le chloroéthylbenzene. Ainsi, par exemple, le 2-bromopropionate d'éthyle pourra permettre d'introduire dans le copolymère la chaine terminale **I** sous forme d'une chaine alkyle en C₂ et le bromure de benzyle sous forme d'un groupement benzyle.

Pour la polymérisation RAFT, l'agent de transfert peut classiquement être éliminé du copolymère en fin de polymérisation selon tout procédé connu.

Selon une variante, la chaine terminale **I** peut également être obtenue dans le copolymère par polymérisation RAFT selon les méthodes décrites dans l'article de Moad, G. and co., Australian Journal of Chemistry, 2012, 65, 985-1076. La chaine terminale **I** peut, par exemple, être introduite par aminolyse lorsque l'on utilise un agent de transfert. Les agents de transfert de type RAFT sont bien connus de l'homme de l'art. Une grande diversité d'agents de transfert de type RAFT sont disponibles ou bien assez aisément synthétisables. On peut citer à titre d'exemple, les agents de transfert de type thiocarbonylthio, dithiocarbonate, xanthate, dithiocarbamate et trithiocarbonate, par exemple le S,S₀-dibenzyl trithiocarbonate (DBTTC), le S,S-bis(α,α'-dimethyl-α"-acide acétique) trithiocarbonate (BDMAT) ou le 2-cyano-2-propyl benzodithioate (CPD). Selon un procédé connu, l'agent de transfert peut être clivé en fin de polymérisation en faisant réagir un agent de clivage tel que les alkylamines en C2-C6, la fonction terminale du copolymère peut dans ce cas être un groupement thiol -SH.

Selon un mode de réalisation particulier, le copolymère à blocs est un copolymère diséquencé (encore appelé diblocs). La structure copolymère à blocs peut être du type **IAB** ou **IBA**, avantageusement **IAB**. La chaine terminale I peut être directement liée au bloc **A** ou **B** selon la structure respectivement **IAB** ou **IBA** ou, être reliée par l'intermédiaire d'un groupement de liaison, par exemple, une fonction ester, amide, amine ou éther. Le groupement de liaison forme alors un pont entre la chaine terminale **I** et le bloc **A** ou **B.**

Selon un mode de réalisation particulier, le copolymère à blocs peut également être fonctionnalisé en bout de chaine selon tout procédé connu, notamment par hydrolyse, aminolyse et/ou substitution nucléophile.

On entend par aminolyse, toute réaction chimique dans laquelle une molécule est scindée en deux parties par réaction d'une molécule d'ammoniac ou d'une amine. Un exemple général d'aminolyse consiste à remplacer un halogène d'un groupement alkyle par réaction avec une amine, avec élimination d'halogénure d'hydrogène. L'aminolyse peut être utilisée, par exemple, pour une polymérisation ATRP qui produit un copolymère ayant un halogénure en position terminale ou pour une polymérisation RAFT pour éliminer la liaison thio, dithio ou trithio introduite dans le copolymère par l'agent de transfert RAFT.

On peut ainsi introduire une chaîne terminale **I'** par post-fonctionnalisation du copolymère à blocs obtenu par polymérisation séquencée et contrôlée des monomères mₐ et m_{b} décrite ci-dessus.

La chaîne terminale **I'** comprend, avantageusement, une chaine hydrocarbonée, linéaire ou ramifiée, cyclique ou acyclique, en C₁ à C₃₂, de préférence en C₁ à C₂₄, plus préférentiellement C₁ à C₁₀, encore plus préférentiellement un groupement alkyle, éventuellement substituée par un ou plusieurs groupements contenant au moins un hétéroatome choisi parmi N et O, de préférence N.

Pour une polymérisation ATRP utilisant un halogénure métallique comme catalyseur, cette fonctionnalisation peut, par exemple, être réalisée en traitant le copolymère **IAB** ou **IBA** obtenu par ATRP avec une alkylamine primaire en C₁ à C₃₂ ou un alcool en C₁ à C₃₂ dans des conditions douces pour ne pas modifier les fonctions présentes sur les blocs **A, B** et **I.**

Le groupement ammonium quaternaire du bloc **B** décrit ci-dessus peut être acyclique ou cyclique.

Le groupement ammonium quaternaire acyclique est, avantageusement, choisi parmi les sels quaternaires de trialkylammonium, de guanidinium et d'iminium.

Le groupement ammonium quaternaire cyclique est, avantageusement, choisi parmi les composés hétérocycliques contenant au moins un atome d'azote, en particulier choisi parmi les sels quaternaires de pyrrolinium, de pyridinium, d'imidazolium, de triazolium, de triazinium, d'oxazolium et d'isoxazolium.

Le groupement ammonium quaternaire du bloc **B** est, avantageusement, un sel de trialkylammonium quaternaire.

Selon un mode de réalisation particulier, le bloc **B** est, de préférence, dérivé d'un monomère (m_{b}) obtenu par réaction :
- d'une amine tertiaire de formule NR₃R₄R₅ ou R₆N=R₇ dans laquelle R₃, R₄, R₅, R₆ et R₇ sont tels que décrits ci-dessus, et
- d'un monomère intermédiaire (méth)acrylate ou (méth)acrylamide mᵢ de formule (VII) suivante : 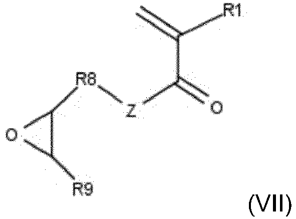 Dans laquelle,
   Z, R₁, R₈ et R₉ sont tels que décrits ci-dessus.

Selon un autre mode de réalisation particulier, le bloc **B** est obtenu par post-fonctionnalisation d'un polymère intermédiaire P*i* comprenant au moins un bloc **P** de formule (VIII) suivante : 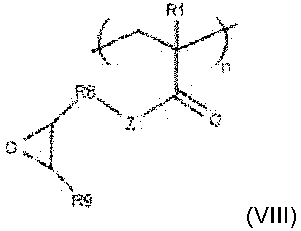 Dans laquelle,
n, Z, R₁, R₈ et R₉ sont tels que décrits ci-dessus.

La post-fonctionnalisation correspond à la réaction du polymère intermédiaire Pi avec une amine tertiaire de formule NR₃R₄R₅ ou R₆N=R₇ dans laquelle R₃, R₄, R₅ et R₆, R₇ sont tels que décrit précédemment.

L'amine tertiaire peut, par exemple, être choisie parmi les amines tertiaires acycliques, de préférence les trialkylamines, les guanidines et les imines quaternarisables. L'amine tertiaire est, avantageusement, choisie parmi les trialkylamines, en particulier celles dont les groupements alkyles sont identiques ou différents et choisis, indépendamment, parmi les alkyles en C₁ à C₁₈, de préférence en C₁ à C₁₂, linéaires ou ramifiées, cycliques ou acycliques, de préférence acyclique.

Selon une variante, l'amine tertiaire peut être choisie parmi les amines tertiaires cycliques, de préférence les pyrrolines, pyridines, imidazoles, triazoles, guanidines, imines, triazines, oxazoles et isoxazoles quaternarisables.

Le polymère intermédiaire P*i* peut également comprendre au moins un bloc **A** tel que décrit ci-dessus.

Selon un mode de réalisation particulier, le bloc **B** de formule (III) ou (IV) est obtenu par quaternarisation, selon tout procédé connu, d'une amine tertiaire correspondant au groupement ammonium quaternaire du bloc B et de formule NR₃R₄R₅ ou R₆N=R₇ dans laquelle R₃, R₄, R₅, R₆ et R₇ sont tels que définis ci-dessus. L'étape de quaternarisation peut être réalisée par post-fonctionnalisation d'un polymère intermédiaire portant l'amine tertiaire NR₃R₄R₅ ou R₆N=R₇, par exemple, par réaction avec un halogénure d'alkyle suivie éventuellement d'une réaction d'échange d'anion. On peut citer, à titre d'exemple de quaternarisation, une réaction de post-fonctionnalisation d'un polymère intermédiaire portant l'amine tertiaire NR₃R₄R₅ ou R₆N=R₇, par réaction avec un époxyde (oxirane). L'étape de quaternarisation peut également être réalisée avant la réaction de copolymérisation, sur le monomère portant l'amine tertiaire NR₃R₄R₅ ou R₆N=R₇, par exemple, par réaction avec un halogénure d'alkyle ou un époxyde, la post-fonctionnalisation étant néanmoins préférée. On préférera réaliser la quaternarisation faisant intervenir un époxyde.

Le copolymère à blocs décrit ci-dessus est particulièrement avantageux quand il est utilisé comme additif détergent dans un carburant liquide de moteur à combustion interne.

On entend par additif détergent pour carburant liquide, un additif qui est incorporé à faible quantité dans le carburant liquide et produit un effet sur la propreté dudit moteur comparativement audit carburant liquide non spécialement additivé.

Le carburant liquide est issu d'une ou de plusieurs sources choisies parmi le groupe consistant en les sources minérales, animales, végétales et synthétiques. On choisira, de préférence, le pétrole comme source minérale.

Le carburant liquide est, de préférence, choisi parmi les carburants hydrocarbonés et les carburants non essentiellement hydrocarbonés, seuls ou en mélange.

On entend par carburant hydrocarboné, un carburant constitué d'un ou de plusieurs composés constitués uniquement de carbone et d'hydrogène.

On entend par carburant non essentiellement hydrocarboné, un carburant constitué d'un ou de plusieurs composés constitués non essentiellement de carbone et d'hydrogène c'est-à-dire qui contiennent également d'autres atomes, en particulier des atomes d'oxygène.

Les carburants hydrocarbonés comprennent notamment des distillats moyens de température d'ébullition allant de 100 à 500°C ou les distillats plus légers ayant une température d'ébullition dans la gamme des essences. Ces distillats peuvent par exemple être choisis parmi les distillats obtenus par distillation directe d'hydrocarbures bruts, les distillats sous vide, les distillats hydrotraités, les distillats issus du craquage catalytique et/ou de l'hydrocraquage de distillats sous vide, les distillats résultant de procédés de conversion type ARDS (en anglais « atmospheric residue désulfuration ») et/ou de viscoréduction, les distillats issus de la valorisation des coupes Fischer Tropsch. Les carburants hydrocarbonés sont typiquement les essences et les gazoles (également appelé carburant Diesel).

Les essences comprennent, en particulier, toutes compositions de carburant pour moteur par allumage commandé disponibles dans le commerce. On peut citer à titre d'exemple représentatif, les essences répondant à la norme NF EN 228. Les essences ont généralement des indices d'octane suffisamment élevés pour éviter le phénomène de cliquetis. Typiquement, les carburants de type essence commercialisés en Europe, conformes à la norme NF EN 228 ont un indice d'octane moteur (MON en anglais « Motor Octane Number ») supérieur à 85 et un indice d'octane recherche (RON en anglais « Research Octane Number ») d'un minimum de 95. Les carburants de type essence ont, généralement, un RON allant de 90 à 100 et un MON allant de 80 à 90, les RON et MON étant mesurés selon la norme ASTM D 2699-86 ou D 2700-86.

Les gazoles (carburants Diesel) comprennent, en particulier, toutes compositions de carburant pour moteur Diesel disponibles dans le commerce. On peut citer, à titre d'exemple représentatif, les gazoles répondant à la norme NF EN 590.

Les carburants non essentiellement hydrocarbonés comprennent notamment les oxygénés, par exemple les distillats résultant de la conversion BTL (en anglais « biomass to liquid ») de la biomasse végétale et/ou animale, pris seuls ou en combinaison ; les biocarburants, par exemple les huiles et/ou esters d'huiles végétales et/ou animales ; les biodiesels d'origine animale et/ou végétale et les bioéthanols.

Les mélanges de carburant hydrocarboné et de carburant non essentiellement hydrocarboné sont typiquement les gazoles de type Bₓ ou les essences de type Eₓ.

On entend par gazole de type Bₓ pour moteur Diesel, un carburant gazole qui contient x% (v/v) d'esters d'huiles végétales ou animale (y compris huiles de cuisson usagées) transformés par un procédé chimique appelé transestérification, obtenu en faisant réagir cette huile avec un alcool afin d'obtenir des esters d'acide gras (EAG). Avec le méthanol et l'éthanol, on obtient, respectivement, des esters méthyliques d'acides gras (EMAG) et des esters éthyliques d'acides gras (EEAG). La lettre "B" suivie par un nombre indique le pourcentage d'EAG contenu dans le gazole. Ainsi, un B99 contient 99% de EAG et 1% de distillats moyens d'origine fossile (source minérale), le B20, 20% de EAG et 80% de distillats moyens d'origine fossile etc.... On distingue donc les gazoles de type B₀ qui ne contiennent pas de composés oxygénés, des gazoles de type Bx qui contiennent x% (v/v) d'esters d'huiles végétales ou d'acides gras, le plus souvent esters méthyliques (EMHV ou EMAG). Lorsque l'EAG est utilisé seul dans les moteurs, on désigne le carburant par le terme B100.

On entend par essence de type Eₓ pour moteur par allumage commandé, un carburant essence qui contient x% (v/v) d'oxygénés, généralement de l'éthanol, du bioéthanol et/ou l'éthyl-tertio-butyl-éther (ETBE).

La teneur en soufre du carburant liquide est, de préférence, inférieure ou égale à 5000 ppm, de préférence inférieure ou égale à 500 ppm, et plus préférentiellement inférieure ou égale à 50 ppm, voire même inférieure à 10 ppm et avantageusement sans soufre.

Le copolymère à blocs décrit ci-dessus est utilisé comme additif détergent dans le carburant liquide à une teneur, avantageusement d'au moins 10ppm, de préférence d'au moins 50 ppm, plus préférentiellement à une teneur de 10 à 5 000ppm, encore plus préférentiellement de 10 à 1 000ppm.

Selon un mode de réalisation particulier, l'utilisation d'un copolymère à blocs tel que décrit précédemment dans le carburant liquide permet de maintenir la propreté d'au moins une des parties internes du moteur à combustion interne et/ou de nettoyer au moins une des parties internes du moteur à combustion interne.

L'utilisation du copolymère à blocs dans le carburant liquide permet, en particulier, de limiter ou éviter la formation de dépôts dans au moins une des parties internes dudit moteur (effet « keep-clean » en anglais) et/ou réduire les dépôts existant dans au moins une des parties internes dudit moteur (effet « clean-up » en anglais).

Ainsi, l'utilisation du copolymère dans le carburant liquide permet, comparativement au carburant liquide non spécialement additivé, de limiter ou éviter la formation de dépôts dans au moins une des parties internes dudit moteur ou réduire les dépôts existant dans au moins une des parties internes dudit moteur.

Avantageusement, l'utilisation du copolymère dans le carburant liquide permet d'observer à la fois les deux effets, limitation (ou empêchement) et réduction de dépôts (effets « keep-clean » et « clean-up »).

On distingue les dépôts en fonction du type de moteur à combustion interne et de la localisation des dépôts dans les parties internes dudit moteur.

Selon un mode de réalisation particulier, le moteur à combustion interne est un moteur à allumage commandé, de préférence à injection directe (DISI en anglais «Direct Injection Spark Ignition engine»). Les dépôts visés sont localisés dans au moins une des parties internes dudit moteur à allumage commandé. La partie interne du moteur à allumage commandé maintenue propre (keep-clean) et/ou nettoyée (clean-up) est, avantageusement, choisie parmi le système d'admission du moteur, en particulier les soupapes d'admission (IVD en anglais «Intake Valve Deposit»), la chambre de combustion (CCD en anglais «Combustion Chamber Deposit» ou TCD en anglais «Total Chamber Deposit») et le système d'injection de carburant, en particulier les injecteurs d'un système d'injection indirecte (PFI en anglais «Port Fuel Injector») ou les injecteurs d'un système d'injection directe (DISI).

Selon un autre mode de réalisation particulier, le moteur à combustion interne est un moteur Diesel, de préférence un moteur Diesel à injection directe, en particulier un moteur Diesel à système d'injection Common-Rail (CRDI en anglais «Common Rail Direct Injection»). Les dépôts visés sont localisés dans au moins une des parties internes dudit moteur Diesel.

Avantageusement, les dépôts visés sont localisés dans le système d'injection du moteur Diesel, de préférence, localisés sur une partie externe d'un injecteur dudit système d'injection, par exemple le nez de l'injecteur et/ou sur une partie interne d'un injecteur dudit système d'injection (IDID en anglais «Internal Diesel Injector Deposits»), par exemple à la surface d'une aiguille d'injecteur.

Les dépôts peuvent être constitués de dépôts liés au phénomène de cokage («coking » en anglais) et/ou des dépôts de type savon et/ou vernis (en anglais «lacquering»).

Le copolymère à blocs tel que décrit précédemment peut, avantageusement, être utilisé dans le carburant liquide pour réduire et/ou éviter la perte de puissance due à la formation des dépôts dans les parties internes d'un moteur Diesel à injection directe, ladite perte de puissance étant déterminée selon la méthode d'essai moteur normée CEC F-98-08.

Le copolymère à blocs tel que décrit précédemment peut, avantageusement, être utilisé dans le carburant liquide pour réduire et/ou éviter la restriction du flux de carburant émis par l'injecteur d'un moteur Diesel à injection directe au cours de son fonctionnement, ladite restriction de flux étant déterminée selon la méthode d'essai moteur normée CEC F-23-1-01.

Avantageusement, l'utilisation du copolymère tel que décrit ci-dessus permet, comparativement au carburant liquide non spécialement additivé, de limiter ou éviter la formation de dépôts sur au moins un type de dépôts décrits précédemment et/ou réduire les dépôts existant sur au moins un type de dépôts décrits précédemment.

Selon un mode de réalisation particulier, l'utilisation du copolymère à blocs décrit ci-dessus permet également de réduire la consommation de carburant du moteur à combustion interne.

Selon un autre mode de réalisation particulier, l'utilisation du copolymère à blocs décrit ci-dessus permet également de réduire les émissions de polluants, en particulier, les émissions de particules du moteur à combustion interne.

Avantageusement, l'utilisation du copolymère à blocs permet de réduire à la fois la consommation de carburant et les émissions de polluants.

Le copolymère à blocs décrit ci-dessus peut être utilisé seul, sous forme d'un mélange d'au moins deux desdits copolymères à blocs ou sous forme d'un concentré.

Le copolymère à blocs peut être ajouté dans le carburant liquide au sein d'une raffinerie et/ou être incorporé en aval de la raffinerie et/ou éventuellement, en mélange avec d'autres additifs sous forme d'un concentré d'additifs, encore appelé selon l'usage « package d'additifs ».

Le copolymère à blocs décrit ci-dessus est utilisé en mélange avec un liquide organique sous forme d'un concentré.

Selon l'invention, un concentré pour carburant comprend un ou plusieurs copolymères tels que décrits ci-dessus, en mélange avec un liquide organique, et au moins un autre additif pour carburant de moteur à combustion interne.

Le liquide organique est inerte vis-à-vis du copolymère à blocs décrit ci-dessus et miscible dans le carburant liquide décrit précédemment. On entend par miscible, le fait que le copolymère à blocs et le liquide organique forment une solution ou une dispersion de manière à faciliter le mélange du copolymère à blocs dans les carburants liquides selon les procédés classiques d'additivation des carburants.

Le liquide organique est, avantageusement, choisi parmi les solvants hydrocarbonés aromatiques tels que le solvant commercialisé sous le nom « SOLVESSO », les alcools, les éthers et autres composés oxygénés et les solvants paraffiniques tels que l'hexane, le pentane ou les isoparaffines, seuls ou en mélange.

Le concentré peut, avantageusement, comprendre de 5 à 99% massique, de préférence de 10 à 80%, plus préférentiellement de 25 à 70% de copolymère tel que décrit précédemment.

Le concentré peut, typiquement, comprendre de 1 à 95% massique, de préférence de 10 à 70%, plus préférentiellement de 25 à 60% de liquide organique, le reste correspondant au copolymère, étant entendu que le concentré peut comprendre un ou plusieurs copolymères à blocs tels que décrits ci-dessus.

De façon générale, la solubilité du copolymère à blocs dans les liquides organiques et les carburants liquides décrits précédemment dépendra notamment des masses molaires moyennes en poids et en nombre, respectivement M_{w} et Mₙ du copolymère. On choisira les masses molaires moyennes M_{w} et Mₙ du copolymère à blocs de manière à ce que le copolymère soit soluble dans le carburant liquide et/ou le liquide organique du concentré pour lesquels il est destiné.

Les masses molaires moyennes M_{w} et Mₙ du copolymère à blocs peuvent également avoir une influence sur l'efficacité de ce copolymère comme additif détergent. On choisira donc les masses molaires moyennes M_{w} et Mₙ de manière à optimiser l'effet du copolymère à blocs, notamment l'effet de détergence (propreté moteur) dans les carburants liquides décrits ci-dessus.

Selon un mode de réalisation particulier, le copolymère a, avantageusement, une masse molaire moyenne en poids (Mw) allant de 500 à 30 000 g.mol⁻¹, de préférence de 1000 à 10 000 g.mol⁻¹, plus préférentiellement inférieure ou égale à 4000 g.mol⁻¹, et/ou une masse molaire moyenne en nombre (Mn) allant de 500 à 15 000 g.mol⁻¹, de préférence de 1000 à 10 000 g.mol⁻¹, plus préférentiellement de 3000 à 8000 g.mol^{-1,}encore plus préférentiellement de 3000 à 7000 g.mol⁻¹, en particulier de 4 000 à 5 000 g.mol⁻¹. Selon une variante, la masse molaire moyenne en nombre (Mn) est inférieure ou égale à 4000 g.mol⁻¹. Les masses molaires moyennes en nombre et en poids sont mesurées par chromatographie d'exclusion stérique (SEC en anglais « Size Exclusion Chromatography »). Les conditions opératoires de la SEC, notamment, le choix du solvant seront choisies en fonction des fonctions chimiques présentent au sein du copolymère à blocs.

Selon l'invention, le copolymère à blocs est utilisé sous forme d'un concentré d'additifs en association avec au moins un autre additif pour carburant de moteur à combustion interne différent du copolymère à blocs décrit précédemment.

Le concentré d'additifs peut, typiquement, comprendre un ou plusieurs autres additifs choisis parmi des additifs détergents différents du copolymère à blocs décrit ci-dessus, par exemple parmi les agents anti-corrosion, les dispersants, les désémulsifiants, les agents anti-mousse, les biocides, les réodorants, les additifs procétane, les modificateurs de friction, les additifs de lubrifiance ou additifs d'onctuosité, les agents d'aide à la combustion (promoteurs catalytiques de combustion et de suie), les agents améliorant le point de trouble, le point d'écoulement, la TLF (« Température limite de filtrabilité »), les agents anti-sédimentation, les agents anti-usure et les agents modifiant la conductivité.

Parmi ces additifs, on peut citer en particulier :
a) les additifs procétane, notamment (mais non limitativement) choisis parmi les nitrates d'alkyle, de préférence le nitrate de 2-éthyl hexyle, les peroxydes d'aryle, de préférence le peroxyde de benzyle, et les peroxydes d'alkyle, de préférence le peroxyde de ter-butyle ;
b) les additifs anti-mousse, notamment (mais non limitativement) choisis parmi les polysiloxanes, les polysiloxanes oxyalkylés, et les amides d'acides gras issus d'huiles végétales ou animales. Des exemples de tels additifs sont donnés dans EP861882, EP663000, EP736590 ;
c) Les additifs fluidifiant à froid (CFI en anglais « Cold Flow Improver ») choisi parmi les copolymères d'éthylène et d'ester insaturé, tels que copolymères éthylène/acétate de vinyle (EVA), éthylène/propionate de vinyle (EVP), éthylène/éthanoate de vinyle (EVE), éthylène/méthacrylate de méthyle (EMMA), et éthylène/fumarate d'alkyle décrits, par exemple, dans les documents US3048479, US3627838, US3790359, US3961961 et EP261957.
d) les additifs de lubrifiance ou agents anti-usure, notamment (mais non limitativement) choisis dans le groupe constitué par les acides gras et leurs dérivés ester ou amide, notamment le monooléate de glycérol, et les dérivés d'acides carboxyliques mono- et polycycliques. Des exemples de tels additifs sont donnés dans les documents suivants: EP680506, EP860494, WO98/04656, EP915944, FR2772783, FR2772784.
e) les additifs de point de trouble, notamment (mais non limitativement) choisis dans le groupe constitué par les terpolymères oléfine à chaîne longue/ester (méth)acrylique /maléimide, et les polymères d'esters d'acides fumarique /maléique. Des exemples de tels additifs sont donnés dans FR2528051, FR2528051, FR2528423, EP112195, EP172758, EP271385, EP291367 ;
f) les additifs détergents notamment (mais non limitativement) choisis dans le groupe constitué par les succinimides, les polyétheramines et les sels d'ammonium quaternaire; par exemple ceux décrits dans les documents US4171959 et WO2006135881.
g) les additifs polyfonctionnels d'opérabilité à froid choisis dans le groupe constitué par les polymères à base d'oléfine et de nitrate d'alkényle tels que décrits dans EP573490.

Ces autres additifs sont en général ajoutés en quantité allant de 100 à 1 000 ppm (chacun).

Le rapport molaire et/ou massique entre le monomère m_{b} et le monomère mₐ et/ou entre le bloc A et B dans le copolymère à blocs décrit ci-dessus sera choisi de manière à ce que le copolymère à blocs soit soluble dans le carburant et/ou le liquide organique du concentré pour lesquels il est destiné. De même, ce rapport pourra être optimisé en fonction du carburant et/ou du liquide organique de manière à obtenir le meilleur effet sur la propreté moteur.

L'optimisation du rapport molaire et/ou massique peut être effectuée par des essais de routine accessibles à l'homme du métier.

Le rapport molaire entre le monomère m_{b} et le monomère mₐ ou entre les blocs **A** et **B** dans le copolymère à blocs décrit ci-dessus va, avantageusement, de 1:10 à 10:1, de préférence de 1:2 à 2:1, plus préférentiellement de 1:0,5 à 0,5:2.

Selon un mode de réalisation particulier, une composition de carburant est préparée selon tout procédé connu en additivant le carburant liquide décrit précédemment avec au moins un copolymère à blocs tel que décrit ci-dessus.

Selon l'invention, une composition de carburant comprend :
(1) un carburant tel que décrit ci-dessus, et
(2) un ou plusieurs copolymères à blocs tels que décrits précédemment.

Le carburant (1) est, en particulier, choisi parmi les carburants hydrocarbonés et les carburants non essentiellement hydrocarbonés décrits précédemment, pris seuls ou en mélange.

La combustion de cette composition de carburant comprenant un tel copolymère dans un moteur à combustion interne produit un effet sur la propreté du moteur comparativement au carburant liquide non spécialement additivé et permet, en particulier, de prévenir ou réduire l'encrassement des parties internes dudit moteur. L'effet sur la propreté du moteur est tel que décrit précédemment dans le cadre de l'utilisation du copolymère à blocs.

Selon un mode de réalisation particulier, la combustion de la composition de carburant comprenant un tel copolymère à blocs dans un moteur à combustion interne permet également de réduire la consommation de carburant et/ou les émissions de polluants.

Le copolymère à blocs est incorporé, de préférence, à faible quantité dans le carburant liquide décrit précédemment, la quantité de copolymère à blocs étant suffisante pour produire un effet détergent tel que décrit ci-dessus et améliorer ainsi la propreté moteur.

La composition de carburant comprend avantageusement au moins 5ppm, de préférence de 10 à 5 000ppm, plus préférentiellement de 20 à 2000ppm, en particulier de 50 à 500ppm de copolymère(s) à blocs (2).

Outre le copolymère à blocs décrit ci-dessus, la composition de carburant peut également comprendre un ou plusieurs autres additifs différents du copolymère à blocs utilisé selon l'invention, choisis parmi les autres additifs détergents connus, par exemple parmi les agents anti-corrosion, les dispersants, les désémulsifiants, les agents anti-mousse, les biocides, les réodorants, les additifs procétane, les modificateurs de friction, les additifs de lubrifiance ou additifs d'onctuosité, les agents d'aide à la combustion (promoteurs catalytiques de combustion et de suie), les agents améliorant le point de trouble, le point d'écoulement, la TLF, les agents anti-sédimentation, les agents anti-usure et/ou les agents modifiant la conductivité.

Les additifs différents du copolymère à blocs utilisé selon l'invention sont, par exemple, les additifs pour carburant listés ci-dessus.

Selon un mode de réalisation particulier, un procédé de maintien de la propreté (keep-clean) et/ou de nettoyage (clean-up) d'au moins une des parties internes d'un moteur à combustion interne comprend la préparation d'une composition de carburant par additivation d'un carburant avec un ou plusieurs copolymères à blocs telle que décrite ci-dessus et la combustion de ladite composition de carburant dans le moteur à combustion interne.

Selon un mode de réalisation particulier, le moteur à combustion interne est un moteur à allumage commandé, de préférence à injection directe (DISI).

La partie interne maintenue propre et/ou nettoyée du moteur à allumage commandé est, de préférence, choisie parmi le système d'admission du moteur, en particulier les soupapes d'admission (IVD), la chambre de combustion (CCD ou TCD) et le système d'injection de carburant, en particulier les injecteurs d'un système d'injection indirecte (PFI) ou les injecteurs d'un système d'injection directe (DISI).

Selon un autre mode de réalisation particulier, le moteur à combustion interne est un moteur Diesel, de préférence un moteur Diesel à injection directe, en particulier un moteur Diesel à systèmes d'injection Common-Rail (CRDI).

La partie interne maintenue propre (keep-clean) et/ou nettoyée (clean-up) du moteur Diesel est, de préférence, le système d'injection du moteur Diesel, de préférence une partie externe d'un injecteur dudit système d'injection, par exemple le nez de l'injecteur et/ou une des parties internes d'un injecteur dudit système d'injection, par exemple la surface d'une aiguille d'injecteur.

Le procédé de maintien de la propreté (keep-clean) et/ou de nettoyage (clean-up) comprend les étapes successives de :
a) détermination de l'additivation la plus adaptée au carburant, ladite additivation correspondant à la sélection du ou des copolymères à blocs décrits ci-dessus à incorporer en association, éventuellement, avec d'autres additifs pour carburant tels que décrits précédemment et la détermination du taux de traitement nécessaire pour atteindre une spécification donnée relative à la détergence de la composition de carburant.
b) incorporation dans le carburant du ou des copolymères à blocs sélectionnés au taux déterminé à l'étape a) et, éventuellement, des autres l'additifs pour carburant.

Le ou les copolymères à blocs peuvent être incorporés dans le carburant, seuls ou en mélange, successivement ou simultanément.

Alternativement, le ou les copolymères à blocs peuvent être utilisés sous forme d'un concentré ou d'un concentré d'additifs tel que décrit ci-dessus.

L'étape a) est réalisée selon tout procédé connu et relève de la pratique courante dans le domaine de l'additivation des carburants. Cette étape implique de définir au moins une caractéristique représentative des propriétés de détergence de la composition de carburant.

La caractéristique représentative des propriétés de détergence du carburant dépendra du type de moteur à combustion interne, par exemple Diesel ou par allumage commandé, du système d'injection directe ou indirecte et de la localisation dans le moteur des dépôts visés pour le nettoyage et/ou le maintien de la propreté.

Pour les moteurs Diesel à injection directe, la caractéristique représentative des propriétés de détergence du carburant peut, par exemple, correspondre à la perte de puissance due à la formation des dépôts dans les injecteurs ou la restriction du flux de carburant émis par l'injecteur au cours du fonctionnement dudit moteur.

La caractéristique représentative des propriétés de détergence peut également correspondre à l'apparition de dépôts de type lacquering au niveau de l'aiguille de l'injecteur (IDID).

Des méthodes d'évaluation des propriétés détergente des carburants ont largement été décrites dans la littérature et relèvent des connaissances générales de l'homme du métier. On citera, à titre d'exemple non limitatif, les essais normalisés ou reconnus par la profession ou les méthodes décrites dans la littérature suivants :
Pour les moteurs Diesel à injection directe :
- la méthode DW10, méthode d'essai moteur normée CEC F-98-08, pour mesurer de la perte de puissance des moteurs Diesel à injection directe
- la méthode XUD9, méthode d'essai moteur normée CEC F-23-1-01 Issue 5, pour mesurer la restriction de flux de carburant émise par l'injecteur
- la méthode décrite par la demanderesse dans la demande WO2014/029770 page 17 à 20, pour l'évaluation des dépôts lacquering (IDID), cette méthode étant citée à titre d'exemple et/ou incorporée par référence à la présente demande.

Pour les moteurs par allumage commandé à injection indirecte :
- la méthode Mercedes Benz M102E, méthode d'essai normée CEC F-05-A-93, et
- la méthode Mercedes Benz M111, méthode d'essai normée CEC F-20-A-98.

Ces méthodes permettent de mesurer les dépôts sur les soupapes d'admission (IVD), les tests étant généralement réalisés sur une essence Eurosuper répondant à la norme EN228.

Pour les moteurs par allumage commandé à injection directe :
- la méthode décrite par la demanderesse dans l'article « Evaluating Injector Fouling in Direct Injection Spark Ignition Engines», Mathieu Arondel, Philippe China, Julien Gueit ; Conventional and future energy for automobiles ; 10th international colloquium ; January 20-22, 2015, p.375-386 (Technische Akademie Esslingen par Techn. Akad. Esslingen, Ostfildern), pour l'évaluation des dépôts de type coking sur l'injecteur, cette méthode étant citée à titre d'exemple et/ou incorporée par référence à la présente demande.
- la méthode décrite dans le document US20130104826, pour l'évaluation des dépôts de type coking sur l'injecteur, cette méthode étant citée à titre d'exemple et/ou incorporée par référence à la présente demande.

La détermination de la quantité de copolymère à blocs à ajouter à la composition de carburant pour atteindre la spécification sera réalisée typiquement par comparaison avec la composition de carburant mais sans le copolymère à blocs utilisé selon l'invention.

La détermination de la quantité de copolymère à ajouter à la composition de carburant pour atteindre la spécification (étape a) décrite précédemment) sera réalisée typiquement par comparaison avec la composition de carburant mais sans le copolymère utilisé selon l'invention, la spécification donnée relative à la détergence pouvant par exemple être une valeur cible de perte de puissance selon la méthode DW10 ou une valeur de restriction de flux selon méthode XUD9 mentionnée ci-dessus.

La quantité de copolymère à blocs peut, également, varier en fonction de la nature et l'origine du carburant, en particulier en fonction du taux de composés à substituants n-alkyle, iso-alkyle ou n-alcényle. Ainsi, la nature et l'origine du carburant peuvent également être un facteur à prendre en compte pour l'étape a).

Le procédé de maintien de la propreté (keep-clean) et/ou de nettoyage (clean-up) peut également comprendre une étape supplémentaire après l'étape b) de vérification de la cible atteinte et/ou d'ajustement du taux d'additivation avec le ou les copolymères comme additif détergent.

Les copolymères à blocs utilisés selon l'invention présentent des propriétés remarquables en tant qu'additif détergent dans un carburant liquide, en particulier dans un carburant gazole ou essence.

### Exemple : Synthèses de copolymères à blocs par polymérisation radicalaire par transfert de chaîne réversible par addition-fragmentation (RAFT)

### Produits de réaction :

- Amorceur de polymérisation : α,α'-Azoisobutyronitrile, **AIBN,** (CAS 78-67-1)
- Agent de transfert RAFT :
   - 2-cyano-2-propylbenzo dithioate >97%, **CPD** (CAS 201611-85-0)
   - S,S₀-dibenzyl trithiocarbonate 98%, **DBTTC** (CAS 26504-29-0).
- Agent de clivage :
   . Hexylamine 99% (CAS 11-26-2)
- Pour l'obtention du bloc B - Monomères m_{b} :
   - méthacrylate de 2-diméthylaminoéthyle 98%, **MADAME** (CAS 2867-47-2),
   - acrylate de 2-diméthylaminoéthyle 98%, **ADAME** (CAS 2439-35-2)
   - N-[3-diméthylamino)propyl]méthacrylamide 99%, **DMAPMA** (CAS 5205-93-6)
- Pour l'obtention du bloc A :
   . acrylate de 2-éthylhexyle 98%, **EHA** (CAS 103-11-7),
   . méthacrylate de 2-éthylhexyle 98%, **EHMA** (CAS 688-84-6),
   . Agent de quaternarisation
      - Bromoéthane 98% (CAS 74-96-4)
      - 1,2-époxybutane 99% (CAS 106-88-7)

Pour la nomenclature des copolymères, nous utiliserons :
- Pour le copolymère intermédiaire, la lettre **C^{x}** avec en indice les cigles des monomères de départ utilisés.
- Pour le copolymère final, les cigles des monomères de départ utilisés, séparés par un « / ».
- la lettre b- devant chaque nom pour indiquer le fait que le copolymère est un copolymère à blocs
- la lettre s- devant chaque nom pour indiquer le fait que le copolymère est un copolymère statistique.

Les exposants «Br» ou «Epo» sont associés aux lettres b- ou s- lorsque le bromoéthane ou le 1,2-époxybutane est respectivement utilisé pour la quaternarisation.
- la lettre q- devant chaque nom indique le fait que l'amine est quaternarisée.

### Exemple 1 - Synthèse d'un copolymère à blocs à partir de EHMA et de MADAME et quaternarisation avec du bromoéthane

### Copolymérisation - Obtention d'un copolymère à blocs b-C¹_{EHMA/ MADAME}

1,1g (7 mmol) de MADAME et 338mg (1,53 mmol) de CPD sont mis en solution dans 0,7mL de toluène puis la solution est mise sous bullage d'azote pendant 30min. 25mg d'AIBN (0,15 mmol) sont mis en solution dans 1mL de toluène puis la solution est mise sous bullage d'azote pendant 30min. Le milieu réactionnel est chauffé jusqu'à 80°C puis la solution d'AIBN est ajoutée sous azote. Le milieu réactionnel est agité sous azote pendant 6h à 80°C.

5mL d'EHMA (22,69 mmol) sont mis en solution dans 3,11mL de toluène, puis la solution est mise sous bullage d'azote pendant 30min. 25mg d'AIBN (0,15 mmol) sont mis en solution dans 2ml de toluène puis la solution est mise sous bullage d'azote pendant 30min. La solution d'EHMA puis la solution d'AIBN sont introduites successivement dans le milieu réactionnel sous azote. Le milieu est agité sous azote pendant environ 16h à 80°C. Après retour à température ambiante et à atmosphère d'air, le solvant est évaporé à sec.

Les taux de monomères résiduels de EHMA et MADAME, la composition relative du copolymère (ratio molaire EHMA/MADAME) sont déterminés par spectroscopie RMN ¹H et le nombre de motifs EHMA et MADAME par RMN ¹³C.

Pour la détermination des taux de monomères résiduels, on utilise deux séries de signaux éthyléniques (systèmes AMX3): une première à 5.99 ppm et 5.43 ppm (MADAME), et une seconde à 5.97 ppm et 5.41 ppm (EHMA). En utilisant l'intégrale du singulet lié au 1,2,4,5-tetrachloro-3-nitrobenzene (TCNB) (7.7 ppm) comme référence unitaire, et compte tenu des masses molaires des composés impliqués (198, 157, et 261 g mol-1 pour respectivement EHMA, MADAME, et TCNB), le taux d'EHMA résiduel est 1.8 % massique et le taux de MADAME résiduel est de 0.2% massique.

Pour la détermination de la composition relative (ratio molaire EHMA/MADAME), on utilise le massif vers 0.8 ppm lié aux 2 groupements CH3 (6H) des unités EHMA du copolymère et un massif 2.3-2.6ppm lié au NCH2 (2H) des unités MADAME. Les intégrales de ces signaux sont directement reliées au nombre d'unités relatives EHMA et MADAME tel que : *n*MADAME / *n*EHMA = 3 x ( 12.3-2.6ppm / *l*0.8ppm ) = 0.32, soit un ratio molaire EHMA/MADAME de 76/24.

Pour le calcul du nombre de motifs, en fixant l'intégrale du signal à 132.3 ppm (lié à 1 groupement CH aromatique du benzodithioate) à 1, on obtient une intégrale pour le massif des groupements OCH2 (1C) des unités EHMA (67.8-66.5 ppm) et une intégrale pour le massif des groupements NCH2 (1C) des unités MADAME (57.4-56.8 ppm) respectivement de 20 et 6. Ainsi, si l'on suppose que toutes les chaînes polymériques comportent le groupement benzodithioate comme groupement terminal, alors le copolymère comporte 20 motifs EHMA et 6 motifs MADAME.

La masse moléculaire moyenne en nombre (Mn), la masse moléculaire moyenne en poids (Mp) et l'indice de polydispersité (Ip) du copolymère b-C¹_{EHMA/ MADAME} sont mesurées par SEC avec un détecteur à réfractomètre différentiel (RI en anglais « Refractive Index ») et du polyméthacrylate de méthyle (PMMA) comme étalon.

Masse moléculaire : Mn = 4900 g/mol ; Mp = 5290 g/mol ; Ip = 1,08.

### Quaternisation - Obtention d'un copolymère à blocs b^{Br}-EHMA₂₀/ q-MADAME₆.

5,9 g de copolymère b-C¹_{EHMA/ MADAME} obtenu précédemment sont solubilisés dans 20mL de dichlorométhane. 2,3mL (30,82 mmol) de bromoéthane sont introduits dans le milieu réactionnel. La solution est agitée 6h à reflux et une nuit à température ambiante. Le solvant est évaporé à sec. Le copolymère quaternisé est mis en solution dans du toluène. La phase organique est lavée trois fois avec une solution aqueuse d'acétate de sodium (2M). La phase organique est ensuite lavée une fois avec de d'eau puis une fois avec une solution de NaCl saturée. Après séchage sur MgSO₄, la phase organique est évaporée à sec. On obtient 5,89g de copolymère b^{Br}-EHMA₂₀/ q-MADAME₆.

### Exemple 2 - Synthèse d'un copolymère à blocs à partir de EHMA et de MADAME et quaternarisation avec du 1,2-époxybutane

### Copolymérisation - Obtention d'un copolymère à blocs b-C²_{EHMA/ MADAME}

1,1g (7 mmol) de MADAME et 642mg (1,45 mmol) de CPD sont mis en solution dans 1,8mL de toluène puis la solution est mise sous bullage d'azote pendant 30min. 47mg (0,29 mmol) d'AIBN sont mis en solution dans 1mL de toluène puis la solution est mise sous bullage d'azote pendant 30min. Le milieu réactionnel est chauffé jusqu'à 80°C puis la solution d'AIBN est ajoutée sous azote. Le milieu réactionnel est agité sous azote pendant 6h à 80°C. La moitié du milieu est prélevée pour analyse, sous azote. 5mL (22,69 mmol) d'EHMA sont mis en solution dans 3,13mL de toluène, puis la solution est mise sous bullage d'azote pendant 30min. 24mg (0,15 mmol) d'AIBN sont mis en solution dans 2ml de toluène puis la solution est mise sous bullage d'azote pendant 30min. La solution d'EHMA puis la solution d'AIBN sont introduites successivement dans le milieu réactionnel sous azote. Le milieu est agité sous azote pendant environ 16h à 80°C. Après retour à température ambiante et à atmosphère d'air, le solvant est évaporé à sec.

Les taux de monomères résiduels de EHMA et MADAME, la composition relative du copolymère (ratio molaire EHMA/MADAME) sont déterminés par spectroscopie RMN ¹H et le nombre de motifs EHMA et MADAME par RMN ¹³C.

Pour la détermination des taux de monomères résiduels, on utilise deux séries de signaux éthyléniques (systèmes AMX3): une première à 5.99 ppm et 5.43 ppm (MADAME), et une seconde à 5.97 ppm et 5.41 ppm (EHMA). En utilisant l'intégrale du singulet lié au TCNB (7.7 ppm) comme référence unitaire, et compte tenu des masses molaires des composés impliqués (198, 157, et 261 g mol-1 pour EHMA, MADAME, et TCNB), le taux d'EHMA résiduel est 0.5 % massique et le taux de MADAME résiduel inférieur à 0.1% massique. Pour la détermination de la composition relative (ratio molaire EHMA/MADAME), on utilise le massif vers 0.8 ppm lié aux 2 groupements CH3 (6H) des unités EHMA du copolymère et un massif 2.3-2.6ppm lié au NCH2 (2H) des unités MADAME. Les intégrales de ces signaux sont directement reliées au nombre d'unités relatives EHMA et MADAME tel que : *n*_{MADAME} / *n*_{EHMA} = 3 x ( 12.3-2.6ppm / *l*0.8ppm ) = 0.22, soit un ratio molaire EHMA/MADAME de 82/18.

Pour le calcul du nombre de motifs, en fixant l'intégrale du signal à 132.3 ppm (lié à 1 groupement CH aromatique du benzodithioate) à 1, on obtient une intégrale pour le massif des groupements OCH2 (1C) des unités EHMA (67.8-66.5 ppm) et une intégrale pour le massif des groupements NCH2 (1C) des unités MADAME (57.4-56.8 ppm) respectivement de 20 et 6. Ainsi, si l'on suppose que toutes les chaînes polymériques comportent le groupement benzodithioate comme groupement terminal, alors le copolymère comporte 23 motifs EHMA et 5 motifs MADAME.

Masse moléculaire : Mn = 4300 g/mol ; Mp = 4900 g/mol ; Ip = 1,14.

### Quaternarisation - Obtention d'un copolymère à blocs b^{Epo}-EHMA₂₃/ q-MADAME₅.

3,056g de copolymère b-C²_{EHMA/ MADAME} sont solubilisés dans 20mL de n-butanol et 10mL de toluène. 2,8mL (32,19 mmol) d'époxyde et 1,8mL (32,47 mmol) d'acide acétique sont introduits dans le milieu. Le milieu réactionnel est agité 16h à 60°C. Après retour à température ambiante le solvant est évaporé à sec. On obtient le copolymère b^{Epo}-EHMA₂₃/ q-MADAME₅.

### Exemple 3 - Synthèse d'un copolymère à blocs à partir de EHA et de DMAPMA et quaternarisation avec du 1,2-époxybutane

### Copolymérisation - Obtention d'un copolymère à blocs b-C³_{EHA/ DMAPMA}

25 mg (0,15 mmol) d'AIBN et 3 mL de toluène sont placés dans un ballon de 10 mL, et dégazés sous un flux d'azote pendant 30 minutes. 10,8 mL (51,87 mmol) d'EHA, 1,003 g (3,45 mmol) de DBTTC et 6,5 mL de toluène sont placés dans un ballon de 50 mL, sous agitation et sous flux d'azote pendant 30 minutes également. Une fois que le chauffe-ballon atteint les 80°C requis, la solution d'AIBN est injectée dans le ballon de 50 mL. Le milieu réactionnel est laissé 7h à 80°C. 26 mg (0,16 mmol) d'AIBN et 3 mL de toluène sont placés dans un ballon de 10 mL, et dégazés sous un flux d'azote pendant 30 minutes. 1,556 g (9,14 mmol) de DMAPMA et 1,5 mL de toluène sont placés dans un ballon de 10 mL, sous agitation et sous flux d'azote pendant 30 minutes également. Suite au bullage, les solutions présentes dans les 2 ballons de 10 mL sont mélangées et le milieu réactionnel est laissé 7h à 80°C. Après séchage à l'évaporateur rotatif, on obtient le copolymère avant clivage.

Les taux de monomères résiduels de EHA et DMAPMA, la composition relative du copolymère (ratio molaire EHA/DMAPMA) sont déterminés par spectroscopie RMN ¹H et le nombre de motifs EHA et DMAPMA par RMN ¹³C.

Pour les taux de monomères résiduels, on détecte trois signaux à 6.34, 6.08, et 5.76 ppm (système AMX) que l'on attribue aux 3 protons éthyléniques du monomère résiduel EHA. On détecte également des signaux à 5.69 ppm et 5.24 ppm liés au DMAPMA (système AMX3). En normalisant l'intégrale du singulet lié au TCNB à 1, on obtient les taux de EHA et de DMAPMA résiduels. Taux de monomères résiduels EHA = 0,1% en masse; Taux de monomères résiduels DMAPMA = 1,1 % en masse.

Pour la composition relative, on utilise le massif vers 3.4-3.0 ppm lié au N(H)CH2 des unités DMAPMA (2H) du copolymère et un massif vers 0.85 ppm liés aux 2 CH₃ des unités EHA (6H). Les intégrales de ces signaux sont directement reliées au nombre d'unités relatives DMAPMA et EHA selon :
nDMAPMA / nEHA = 3 x ( I_{3.4-3.0ppm} / I_{0.85ppm} ) = 3 x ( 0.74 / 12.5 ) = 0.18, soit un rapport molaire EHA/DMAPMA 85/15.

Pour le calcul du nombre de motifs, on détecte sur le spectre obtenu par RMN ¹³C les signaux à 141.5 ppm (1C) et à 126.0 ppm (CH) du groupement benzyle. En calibrant l'intégrale du massif vers 126 ppm à 2.00, on obtient une intégrale de 1.93 pour le signal à 141.5 ppm. L'intégrale moyenne des signaux liés aux motifs EHA du copolymère vaut 46. Le nombre de motifs EHA est donc de 46. En utilisant le rapport molaire EHA/DMAPMA déterminé précédemment, on en déduit que le nombre de motifs DMAPMA est de 6.

3.49g du copolymère sont solubilisés dans 349 mL de THF sous agitation et sous flux d'azote, durant 30 minutes. 316 mg (3,12 mmol) d'hexylamine sont solubilisés dans du THF sous flux d'azote durant 30 minutes puis la solution d'hexylamine est injectée dans le milieu réactionnel. Le milieu réactionnel est agité durant 24 heures sous flux d'azote. Après séchage à l'évaporateur rotatif, on obtient le copolymère b-C³_{EHA/ DMAPMA} avec un rapport molaire EHA/DMAPMA de 85/15 qui comporte 23 motifs EHA et 3 motifs DMAPMA (on considère que le clivage ne change pas la composition molaire). Masse molaire : Mn = 3300 g/mol ; Mp = 4851g/mol ; Ip = 1,47.

### Quaternarisation - Obtention d'un copolymère à blocs b^{Epo}-EHA₂₃/ q-DMAPMA₃.

2.881 g de polymère sont solubilisés dans 40mL de n-butanol à 50°C. Après solubilisation du polymère, 1 mL (17,49 mmol) d'acide acétique et puis 1,5 mL (17,24 mmol) de 1,2-époxybutane sont introduits dans le milieu. Le milieu réactionnel est agité 24h à 50°C. Après retour à température ambiante le solvant est évaporé à sec. On obtient le copolymère b^{Epo}-EHA₂₃/q-DMAPMA₃.

### Exemple 4 comparatif - Synthèse d'un copolymère statistique à partir de EHA et de MADAME et quaternarisation avec du bromoéthane

### Copolymérisation - Obtention d'un copolymère statistique s-C⁴_{EHA/ MADAME}

257 mg (1,57 mmol) d'AIBN et 5mL de toluène sont placés dans un ballon de 10 mL, et dégazés sous un flux d'azote pendant 30 minutes. 22,62 mL (108,63 mmol) d'EHA, 6,1 mL (36,20 mmol) de MADAME, 365 mg (4 mmol) de 1-butanethiol et 43mL de toluène sont placés dans un ballon de 250 mL, sous agitation et sous flux d'azote pendant 30 minutes. Une fois que le chauffe-ballon à atteint la température de 70°C, la solution d'AIBN est injectée dans le milieu réactionnel. Le mélange est laissé 6h à 70°C.

Les taux de monomères résiduels de EHA et MADAME et la composition relative du copolymère (ratio molaire EHA/MADAME) sont déterminés par spectroscopie RMN ¹H. Pour la détermination des taux de monomères résiduels, on utilise deux séries de signaux éthyléniques (systèmes AMX3): une première à 5.99 ppm et 5.43 ppm (MADAME), et une seconde à 6.36, 6.10, et 5.78 ppm (EHA). En utilisant l'intégrale du singulet lié au TCNB (7.7 ppm) comme référence unitaire, et compte tenu des masses molaires des composés impliqués (184, 157, et 261 g mol-1 pour EHA, MADAME, et TCNB), le taux d'EHA résiduel est 4.8 % massique et le taux de MADAME résiduel inférieur à 0.1% massique.

Pour la composition relative (ratio molaire EHA/MADAME), on utilise un massif 2.3-2.6ppm lié au NCH2 (2H) des unités MADAME et un massif vers 0.85 ppm liés aux 2 CH3 des unités EHA (6H). Les intégrales de ces signaux sont directement reliées au nombre d'unités relatives EHA et MADAME. On obtient un rapport molaire EHA/MADAME de 75/25. Après séchage à l'évaporateur rotatif, on obtient le copolymère statistique s-C⁵_{EHA/MADAME} avec un rapport molaire EHA/MADAME de 75/25. Comme pour l'exemple 1, les taux de monomères résiduels de EHMA et MADAME sont calculés par spectroscopie RMN 1H. Taux de monomères résiduels EHA = 4,8% en masse ; Taux de monomères résiduels MADAME <0,1 % en masse. Masse molaire : Mn = 5900 g/mol ; Mp = 10800 g/mol ; Ip=1,83. Les nombres de motifs EHA et MADAME sont déduits de la masse molaire Mn et du rapport EHA/MADAME déterminé par RMN. On trouve 24 motifs EHA et 9 motifs MADAME.

### Quaternarisation - Obtention d'un copolymère statistique s^{Br}-EHA₂₄/ q-MADAME₉.

6,312 g du copolymère statistique s-C⁴_{EHA/ MADAME} sont solubilisés dans 63 mL de diclorométhane à température ambiante. Après solubilisation du polymère, 3,03g (28,05 mmol) de bromoéthane sont ajoutés au milieu réactionnel. Le milieu réactionnel est agité durant 6 heures à 50°C puis à température ambiante pendant une nuit. Après séchage à l'évaporateur rotatif, on obtient le copolymère statistique s^{Br}-EHA₂₄/ q-MADAME₉ avec un rapport molaire EHA/q-MADAME de 75/25.

### Exemple 5 comparatif - Synthèse d'un copolymère statistique à partir de EHA et de MADAME et quaternarisation avec du 1,2-époxybutane

### Copolymérisation - Obtention d'un copolymère statistique s-C⁵_{EHA/ MADAME}

112 mg (0,68 mmol) d'AIBN et 3 mL de toluène sont placés dans un ballon de 10 mL, et dégazés sous un flux d'azote pendant 30 minutes. 11,33 mL (54,42 mmol) d'EHA et 1,507 g (9,59 mmol) de MADAME, 157 mg (1,74 mmol) de 1-butanethiol et 18 mL de toluène sont placés dans un ballon de 50 mL, sous agitation et sous flux d'azote pendant 30 minutes. Une fois que le chauffe-ballon à atteint la température de 70°C, la solution d'AIBN est injectée dans le milieu réactionnel. Le mélange est laissé 6h à 70°C. Après séchage à l'évaporateur rotatif, on obtient le copolymère statistique s-C⁶_{EHA/ MADAME.}

Les taux de monomères résiduels de EHA et MADAME et la composition relative du copolymère (ratio molaire EHA/MADAME) sont déterminés par spectroscopie RMN ¹H.

Pour la détermination des taux de monomères résiduels, on utilise deux séries de signaux éthyléniques (systèmes AMX3): une première à 5.99 ppm et 5.43 ppm (MADAME), et une seconde à 6.36, 6.10, et 5.78 ppm (EHA). En utilisant l'intégrale du singulet lié au TCNB (7.7 ppm) comme référence unitaire, et compte tenu des masses molaires des composés impliqués (184, 157, et 261 g mol-1 pour EHA, MADAME, et TCNB), le taux d'EHA résiduel est 4.7 % massique et le taux de MADAME résiduel inférieur à 0.1% massique.

Pour la composition relative (ratio molaire EHA/MADAME), on utilise un massif 2.3-2.6ppm lié au NCH2 (2H) des unités MADAME et un massif vers 0.85 ppm liés aux 2 CH3 des unités EHA (6H). Les intégrales de ces signaux sont directement reliées au nombre d'unités relatives EHA et MADAME. On obtient un rapport molaire EHA/MADAME de 84/16.

Taux de monomères résiduels EHA = 4,7% en masse ; Taux de monomères résiduels MADAME <0,1 % en masse. Masse molaire : Mn = 6700 g/mol; Mp = 14070 g/mol ; Ip = 2,10. Les nombres de motifs EHA et MADAME sont déduits de la masse molaire Mn et du rapport EHA/MADAME déterminé par RMN. On trouve 31 motifs EHA et 7 motifs MADAME.

### Quaternarisation - Obtention d'un copolymère statistique s^{Epo}-EHA₃₁/ q-MADAME₇.

6,592g du copolymère statistique s-C⁵_{EHA/ MADAME} est solubilisé dans 66 mL de butanol à 50°C. Après solubilisation du polymère, 3,4 mL (59,45 mmol) d'acide acétique et 5,2 mL (59,78 mmol) de 1,2-époxybutane sont ajoutés au milieu réactionnel. Le milieu réactionnel est agité durant 24 heures à 50°C. Après séchage à l'évaporateur rotatif, on obtient le copolymère statistique s^{Epo}-EHA₃₁/ q-MADAME₇.

D'autres copolymères ont été synthétisés selon les mêmes protocoles que les exemples 1 à 5 décrits ci-dessus mais en faisant varier les paramètres, notamment les monomères de départs. Les conditions opératoires et les caractéristiques des copolymères obtenus sont répertoriées dans le tableau 2 suivant :

| Tableau 2 : | Monomères de départ | % monomères résiduels^{( 1)} | Agent de quaternarisation | Rapport molaire⁽²⁾ | Mₙ⁽³⁾ | Ip⁽³⁾ | Stat ⁽⁷)/ bloc | Nbre d'unité⁽⁴⁾ | |
|---|---|---|---|---|---|---|---|---|---|
| | | | | | | | | A⁽⁵⁾ | B ⁽⁶⁾ |
| b^{Epo}-EHMA₂₄/q-MADAME₃ | EHMA | 0,8 | 1,2-époxybutane | 88 /12 | 3000 | 1,52 | bloc | 24 | 3 |
| | MADAME | <0,1 | | | | | | | |
| b^{Epo}-EHMA₂₃/q-MADAME₅ | EHMA | 0,5 | 1,2-époxybutane | 82 /18 | 4300 | 1,14 | bloc | 23 | 5 |
| | MADAME | <0,1 | | | | | | | |
| b^{Epo}-EHMA₃₀/q-MADAME₈ | EHMA | 1,4 | 1,2-époxybutane | 79 /21 | 5000 | 1,1 | bloc | 30 | 8 |
| | MADAME | 1,4 | | | | | | | |
| b^{Epo}-EHMA₃₉/q-MADAME₁₇ | EHMA | 0,4 | 1,2-époxybutane | 70 /30 | 6300 | 1,17 | bloc | 39 | 17 |
| | MADAME | 2,2 | | | | | | | |
| b^{Br}-EHMA₂₀/q-MADAME₆ | EHMA | 0,8 | Bromoéthane | 76 /24 | 4900 | 1,08 | bloc | 20 | 6 |
| | MADAME | <0,1 | | | | | | | |
| b^{Epo}-EHA₂₆/q-MADAME₈ | EHA | 0,5 | 1,2-époxybutane | 76 /24 | 5300 | 1,49 | bloc | 26 | 8 |
| | MADAME | <0,1 | | | | | | | |
| b^{Epo}-EHA₂₃/q-DMAPMA₃ | EHA | 0,1 | 1,2-époxybutane | 92 /8 | 3300 | 1,47 | bloc | 23 | 3 |
| | DMAPMA | 1,1 | | | | | | | |
| s^{Br}-EHA₂₄/q-MADAME₉ | EHA | 4,8 | Bromoéthane | 75 /25 | 5900 | 1,83 | Stat | 24 | 9 |
| | MADAME | <0,1 | | | | | | | |
| s^{Epo}-EHA₃₁/q-MADAME₇ | EHA | 4,7 | 1,2-époxybutane | 84 /16 | 6700 | 2,1 | Stat | 31 | 7 |
| | MADAME | <0,1 | | | | | | | |

| | | | | | | | | | |
|---|---|---|---|---|---|---|---|---|---|
| ⁽¹⁾ Taux de monomères résiduels calculé à partir de l'analyse de mesures RMN 1H réalisées avec un spectromètre Bruker **6**00 MHz (fréquence de Larmor 1H) opérant sous TopSpin 2.1. La sonde de mesure utilisée est une sonde double-résonance X{1H}{19F} BBFO avec gradient de champ magnétique pulsé z et lock 2H (spécifications de la sonde: rapport signal-sur-bruit (S/B) 13C : ASTM = 312:1 ; 10% EB = 278:1). L'analyse est réalisée à 300 K, les concentrations en polymère sont variables dans 0.6 mL de CDCl3), en présence d'une masse connue de 1,2,4,5-tetrachloro-3-nitrobenzene* (TCNB) utilisé comme étalon interne pour la quantification absolue des espèces monomériques résiduelles. Les déplacements chimiques 1H et 13C ont été calibrés avec les signaux 1H et 13C du CDCl3: δ_{1H} 7.26 ppm et δ_{13C} 77.16 ppm ⁽²⁾ Rapport molaire calculé après quaternarisation ⁽³⁾ Mn, Mp et l'indice de polydispersité (Ip) déterminés par SEC, avec un appareil Waters Styragel opérant à 40°C et 645 Psi avec un débit de THF de 1ml/min.équipé d'un détecteur RI. Le solvant utilisé est le THF stabilisé au BHT (1g/l) et le débit est fixé à 1 mL.min⁻¹.Les masses molaires moyennes en nombre (*M*ₙ) ont été déterminées par détection RI (indice de réfraction) à partir des courbes de calibration construites pour des standards PMMA ). ⁽⁴⁾ Les valeurs n et p sont déterminées à partir du rapport molaire, du Mn et de la masse molaire des monomères. Il est considéré que la quaternarisation a peu d'influence sur le Mn du copolymère final, avec une variation de Mn négligeable. Les valeurs de n et p sont arrondies à l'entier. ⁽⁵⁾ Nombre d'unité représente la valeur de p du bloc A selon la formule (I) ou le nombre d'unité de monomères apolaires dans le copolymère statistique considéré. ⁽⁶⁾ Nombre d'unité représente la valeur de n du bloc B selon la formule (I) ou le nombre d'unité de monomères polaires dans le copolymère statistique considéré. | | | | | | | | | |

### Test Moteur XUD9 - Détermination de la perte de débit

Le test XUD9 permet de déterminer la restriction du flux d'un gazole émis par l'injecteur d'un moteur Diesel à préchambre au cours de son fonctionnement, selon la méthode d'essai moteur normée CEC F-23-1-01.

L'objectif de ce test XUD9 est d'évaluer l'aptitude du gazole et/ou de l'additif et/ou de la composition d'additifs testé(s) à maintenir la propreté, effet dit « Keep Clean », des injecteurs d'un moteur Peugeot XUD9 A/L à quatre cylindres et à injection à préchambre Diesel, en particulier d'évaluer son aptitude à limiter la formation de dépôts sur les injecteurs.

Les tests ont été effectués sur un gazole vierge (GOM B7) répondant à la norme EN590 contenant 7 % (vol/vol) ou (v/v) d'ester méthylique d'acide gras (EMAG) et ledit gazole GMO B7 additivé, noté GOMₓ à un taux de traitement d'additif de 50ppm en masse en matière active.

On débute le test avec un moteur Peugeot XUD9 A/L à quatre cylindres et à injection à préchambre Diesel équipé d'injecteurs propres dont on a déterminé le débit au préalable. Le moteur suit un cycle d'essai déterminé pendant 10 heures et 3 minutes (répétition du même cycle 134 fois). En fin d'essai, le débit des injecteurs est à nouveau évalué. La quantité de carburant nécessaire à l'essai est de 60L. La perte de débit est mesurée sur les quatre injecteurs. Les résultats sont exprimés en pourcentage de perte de débit pour différentes levées d'aiguille. Usuellement on compare les valeurs d'encrassement à 0,1 mm de levée d'aiguille car elles sont plus discriminantes et plus précises et répétables (répétabilité < 5%). L'évolution de la perte de débit avant / après essai permet de déduire la perte de débit en pourcentage. Compte tenu de la répétabilité de l'essai, un effet détergent significatif est affirmable pour une réduction de perte de débit soit un gain en débit supérieure à 10 points (>10%) par rapport à un carburant vierge.

Les résultats sont répertoriés dans le tableau 3 ci-dessous :

**Tableau 5**

| Réf. | Additif de détergence | Mₙ⁽³⁾ | Statistique / bloc | Perte de débit* (%) | Gain en débit* (%) |
|---|---|---|---|---|---|
| **GOM B7** | - | - | - | 70,4 | 0 |
| **GOM1** | b^{Epo}-EHMA₂₄/q-MADAME₃ | 3000 | bloc | 21,8 | 48,6 |
| **GOM2** | b^{Epo}-EHMA₂₃/q-MADAME₅ | 4300 | bloc | 6,4 | 64 |
| **GOM3** | b^{Epo}-EHMA₃₀/q-MADAME₈ | 5000 | bloc | 3,0 | 67,4 |
| **GOM4** | b^{Epo}-EHMA₃₉/q-MADAME₁₇ | 6300 | bloc | 12,3 | 58,1 |
| **GOM5** | b^{Br}-EHMA₂₀/q-MADAME₆ | 4900 | bloc | 30,6 | 39,8 |
| **GOM6** | b^{Epo}-EHA₂₆/q-MADAME₈ | 5300 | bloc | 32,1 | 38,3 |
| **GOM7** | b^{Epo}-EHA₂₃/q-DMAPMA₃ | 3300 | bloc | 48,5 | 21,9 |
| **GOM8** | s^{Br}-EHA₂₄/q-MADAME₉ | 5900 | Statistique | 85,8 | -15,4 |
| **GOM9** | s^{Epo}-EHA₃₁/q-MADAME₇ | 6700 | Statistique | 84,9 | -14,5 |

| | | | | | |
|---|---|---|---|---|---|
| * moyenne des 4 injecteurs | | | | | |

On constate que les carburants GOM1 à GOM7 ont un effet remarquable pour limiter l'encrassement des injecteurs XUD9 comparativement au carburant non additivé GOM B7. Les GOM8 et GOM9 encrassent significativement les injecteurs XUD9, comparativement au carburant non additivé GOM B7.

Les compositions gazole additivées avec le copolymère selon la présente invention GOM1 à GOM7 présentent une perte de dédit inférieure à celui du GOM B7 de référence testé. L'additivation du GOM B7 avec le copolymère utilisé selon l'invention permet d'obtenir une perte de débit moyen inférieure à 50% et un gain en débit moyen supérieur à 20 %, même avec un taux d'additivation très faible de 50ppm m/m.

Les copolymères à blocs utilisés selon l'invention présentent des propriétés remarquables en tant qu'additif détergent dans un carburant liquide, en particulier dans un carburant gazole ou essence.

Les copolymères à blocs utilisés selon l'invention sont particulièrement remarquables notamment parce qu'ils sont efficaces comme additif détergent pour une large gamme de carburant liquide et/ou pour un ou plusieurs type de motorisation et/ou contre un ou plusieurs types

## Revendications

1. Composition de carburant comprenant :
(1) un carburant issu d'une ou de plusieurs sources choisies parmi le groupe consistant en les sources minérales, animales, végétales et synthétiques, et
(2) un ou plusieurs copolymères à blocs comprenant :
- au moins un bloc **A** de formule (I) suivante : 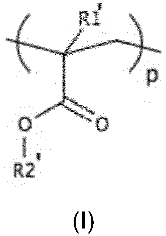 dans laquelle
p est un entier allant de 2 à 100,
R₁^{'} est choisi parmi l'hydrogène et le groupement méthyle,
R'₂ est choisi parmi les chaines hydrocarbonées en C₁ à C₃₄,
- au moins un bloc **B** de formule (II) suivante : 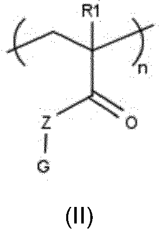 dans laquelle
n est un entier allant de 2 à 40,
R₁ est choisi parmi l'hydrogène et le groupement méthyle,
Z est choisi parmi l'atome d'oxygène et le groupement -NR'- avec R' étant choisi parmi un atome d'hydrogène et les chaines hydrocarbonées en C₁ à C₁₂,
G est une chaine hydrocarbonée en C₁ à C₃₄ substituée par au moins un groupement ammonium quaternaire et éventuellement un ou plusieurs groupements hydroxyle.

2. Composition selon la revendication 1, dans laquelle :
- le bloc **A** consiste en une chaine de motifs structuraux dérivés d'un monomère (méth)acrylate d'alkyle (mₐ), et
- le bloc **B** consiste en une chaine de motifs structuraux dérivés d'un monomère (méth)acrylate d'alkyle ou (méth)acrylamide d'alkyle (m_{b}), dont le radical alkyle est constitué par une chaine hydrocarbonée en C₁ à C₃₄ substituée par au moins un groupement ammonium quaternaire et éventuellement un ou plusieurs groupements hydroxyle.

3. Composition selon la revendication 2, dans laquelle le monomère (mₐ) est choisi parmi les acrylates d'alkyle en C₁ à C₃₄ et méthacrylates d'alkyle en C₁ à C₃₄.

4. Composition selon l'une quelconque des revendications 2 à 3, dans laquelle le radical alkyle du monomère (m_{b}) est substitué par au moins un groupement ammonium quaternaire et un ou plusieurs groupements hydroxyle.

5. Composition selon l'une quelconque des revendications 1 à 4, dans laquelle le groupement ammonium quaternaire est choisi parmi les sels quaternaires de pyrrolinium, de pyridinium, d'imidazolium, de triazolium, de triazinium, d'oxazolium et d'isoxazolium, les sels de trialkylammonium, de guanidinium et d'iminium quaternaires.

6. Compositionselon l'une quelconque des revendications 1 à 5, dans laquelle le bloc **B** est représenté par l'une des formules (III) et (IV) suivantes : 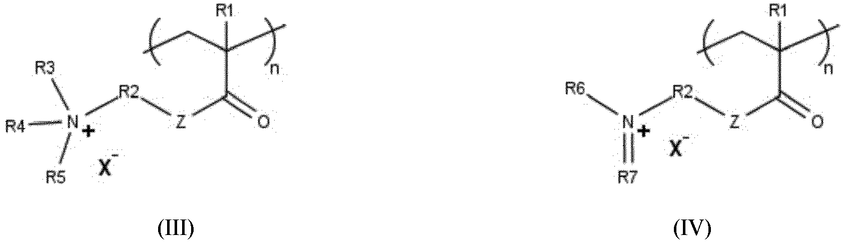 dans laquelle
n, Z et R₁ sont tels que définis dans la revendication 1,
X⁻ est choisi parmi les ions hydroxyde, halogénures et les anions organiques,
R₂ est choisi parmi les chaines hydrocarbonées en C₁ à C₃₄, éventuellement substituées par au moins un groupement hydroxyle,
R₃, R₄ et R₅ sont identiques ou différents et choisis, indépendamment, parmi les chaines hydrocarbonées en C₁ à C₁₈, étant entendu que les groupements alkyles R₃, R₄ et R₅ peuvent contenir un ou plusieurs groupements choisis parmi : un atome d'azote, un atome d'oxygène et un groupement carbonyle et que les groupements R₃, R₄ et R₅ peuvent être reliés ensemble deux à deux pour former un ou plusieurs cycles,
R₆ et R₇ sont identiques ou différents et choisis indépendamment parmi les chaines hydrocarbonées en C₁ à C₁₈, étant entendu que les groupements R₆ et R₇ peuvent contenir un ou plusieurs groupements choisis parmi : un atome d'azote, un atome d'oxygène et un groupement carbonyle et que les groupements R₆ et R₇ peuvent être reliés ensemble pour former un cycle.

7. Composition selon revendication 6, dans laquelle le groupement R₂ est représenté par l'une des formules (V) et (VI) suivantes : 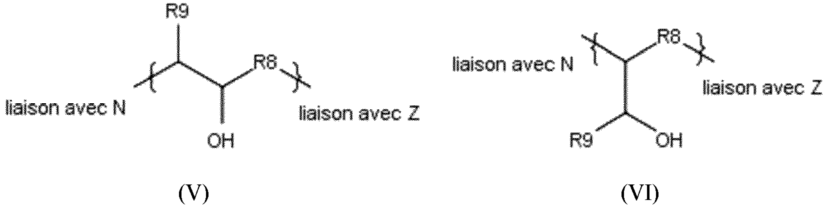 Dans laquelle
R₈ est choisi parmi les chaines hydrocarbonées en C₁ à C₃₂,
R₉ est choisi parmi l'hydrogène et les groupements alkyle en C₁ à C₆.

8. Composition selon l'une quelconque des revendications 1 à 7, dans laquelle le copolymère est un copolymère comprenant au moins une séquence de blocs **AB, ABA** ou **BAB** où lesdits blocs **A** et **B** s'enchainent sans présence de bloc intermédiaire de nature chimique différente.

9. Concentré pour carburant comprenant un ou plusieurs copolymères à blocs tels que définis dans l'une quelconque des revendications 1 à 8, en mélange avec un liquide organique, ledit liquide organique étant inerte vis-à-vis du ou des copolymères à blocs et miscible audit carburant et au moins un autre additif pour carburant de moteur à combustion interne.

10. Utilisation d'un ou de plusieurs copolymères à blocs tels que définis dans l'une quelconque des revendications 1 à 8, comme additif détergent dans un carburant liquide de moteurs à combustion interne, ledit copolymère étant utilisé seul, en mélange ou sous forme d'un concentré tel que définis à la revendication 9.

11. Utilisation selon la revendication10, dans laquelle le copolymère est utilisé dans le carburant liquide pour maintenir la propreté et/ou nettoyer au moins une des parties internes dudit moteur à combustion interne.

12. Utilisation selon la revendication 11, pour réduire la consommation de carburant du moteur à combustion interne.

13. Utilisation selon l'une quelconque des revendications 11 et 12, pour réduire les émissions de polluants, en particulier, les émissions de particules du moteur à combustion interne.

14. Utilisation selon l'une quelconque des revendications 11 à 13, dans laquelle le moteur à combustion interne est un moteur à allumage commandé.

15. Utilisation l'une quelconque des revendications 11 à 13, dans laquelle le moteur à combustion interne est un moteur Diesel, de préférence un moteur Diesel à injection directe.

## Patentansprüche

1. Kraftstoffzusammensetzung, umfassend:
(1) einen Kraftstoff aus einer oder mehreren Quellen, die aus der Gruppe ausgewählt sind, die aus mineralischen, tierischen, pflanzlichen und synthetischen Quellen besteht, und
(2) ein oder mehrere Blockcopolymere, umfassend:
- mindestens einen Block A mit der folgenden Formel (I): 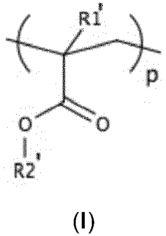 worin
p eine ganze Zahl von 2 bis 100 ist,
R₁^{'} aus Wasserstoff und der Methylgruppe ausgewählt ist,
R'₂ aus Kohlenwasserstoffketten mit C₁ bis C₃₄ ausgewählt ist,
- mindestens einen Block B mit der folgenden Formel (II): 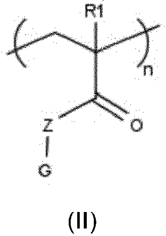 worin
n eine ganze Zahl von 2 bis 40 ist,
R₁ aus Wasserstoff und der Methylgruppe ausgewählt ist,
Z aus einem Sauerstoffatom und der Gruppe -NR'- ausgewählt ist, wobei R' aus einem Wasserstoffatom und Kohlenwasserstoffketten mit C₁ bis C₁₂ ausgewählt ist,
G eine Kohlenwasserstoffkette mit C₁ bis C₃₄ ist, die mit mindestens einer quartären Ammoniumgruppe und gegebenenfalls einer oder mehreren Hydroxygruppen substituiert ist.

2. Zusammensetzung nach Anspruch 1, wobei:
- Block A aus einer Kette mit Struktureinheiten besteht, die aus einem Alklylmethacrylatmonomer (mₐ) abgeleitet sind, und
- Block B aus einer Kette mit Struktureinheiten besteht, die aus einem Alklylmethacrylatmonomer oder Alkylmethacrylamidmonomer (m_{b}) abgeleitet sind, wobei der Alkylrest von einer Kohlenwasserstoffkette mit C₁ bis C₃₄ gebildet ist, die mit mindestens einer quartären Ammoniumgruppe und gegebenenfalls einer oder mehreren Hydroxygruppen substituiert ist.

3. Zusammensetzung nach Anspruch 2, wobei das Monomer (mₐ) aus Alkylacrylaten mit C₁ bis C₃₄ und Alkylmethacrylaten mit C₁ bis C₃₄ ausgewählt ist.

4. Zusammensetzung nach einem der Ansprüche 2 bis 3, wobei der Alkylrest von Monomer (m_{b}) mit mindestens einer quartären Ammoniumgruppe und einer oder mehreren Hydroxygruppen substituiert ist.

5. Zusammensetzung nach einem der Ansprüche 1 bis 4, wobei die quartäre Ammoniumgruppe aus quartären Salzen von Pyrrolinium, Pyridinium, Imidazolium, Triazolium, Triazinium, Oxazolium und Isoxazolium, quartären Trialkylammonium-, Guanidinium- und Iminiumsalzen ausgewählt ist.

6. Zusammensetzung nach einem der Ansprüche 1 bis 5, wobei Block B mit einer der folgenden Formeln (III) und (IV) dargestellt ist: 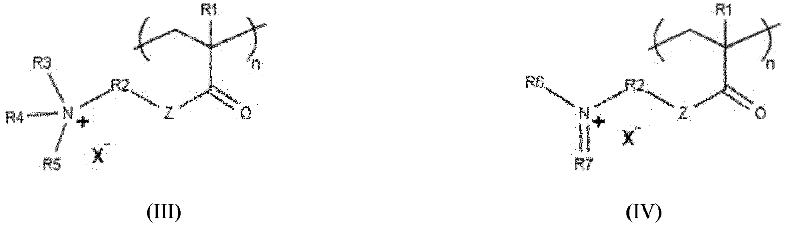 worin
n, Z und R₁ der Definition von Anspruch 1 entsprechen,
X⁻ aus Hydroxidionen, Halogeniden und organischen Anionen ausgewählt ist, R₂ aus Kohlenwasserstoffketten mit C₁ bis C₃₄ ausgewählt ist, die gegebenenfalls mit mindestens einer Hydroxygruppe substituiert sind, R₃, R₄ und R₅ gleich oder unterschiedlich sind und unabhängig voneinander aus Kohlenwasserstoffketten mit C₁ bis C₁₈ ausgewählt sind, wobei die Alkylgruppen R₃, R₄ und R₅ eine oder mehrere Gruppen eine oder mehrere Gruppen enthalten können, die ausgewählt sind aus: einem Stickstoffatom, einem Sauerstoffatom und einer Carbonylgruppe und die Gruppen R₃, R₄ und R₅ zu zweit verbunden sein können und so einen oder mehrere Ringe bilden,
R₆ und R₇ gleich oder unterschiedlich sind und unabhängig voneinander aus Kohlenwasserstoffketten mit C₁ bis C₁₈ ausgewählt sind, wobei die Gruppen R₆ und R₇ eine oder mehrere Gruppen enthalten können, die ausgewählt sind aus: einem Stickstoffatom, einem Sauerstoffatom und einer Carbonylgruppe und die Gruppen R₆ und R₇ verbunden sein können und so einen Ring bilden.

7. Zusammensetzung nach Anspruch 6, wobei die Gruppe R₂ mit einer der folgenden Formeln (V) und (VI) dargestellt ist: 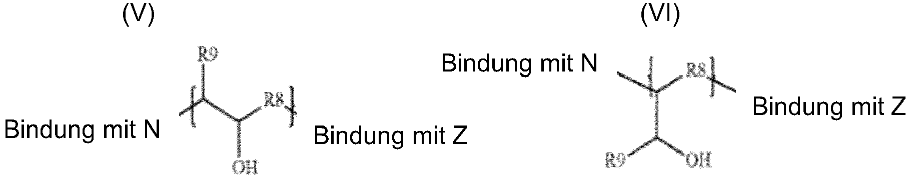 worin
R₈ aus Kohlenwasserstoffketten mit C₁ bis C₃₂ ausgewählt ist,
R₉ aus Wasserstoff und Alkylgruppen mit C₁ bis C₆ ausgewählt ist.

8. Zusammensetzung nach einem der Ansprüche 1 bis 7, wobei das Copolymer ein Copolymer ist, das mindestens eine Blockreihenfolge AB, ABA oder BAB umfasst, bei der die Blöcke A und B aufeinanderfolgen, ohne dass ein Zwischenblock mit anderen chemischen Eigenschaften vorhanden wäre.

9. Konzentrat für Kraftstoff, das ein oder mehrere Blockcopolymere nach einem der Ansprüche 1 bis 8, gemischt mit einer organischen Flüssigkeit, wobei die organische Flüssigkeit gegenüber dem oder den Blockcopolymeren inert ist und mit dem Kraftstoff mischbar ist, und mindestens ein weiteres Additiv für Kraftstoffe für Verbrennungsmotoren umfasst.

10. Verwendung von einem oder mehreren Blockcopolymeren nach einem der Ansprüche 1 bis 8 als Reinigungsadditiv in einem flüssigen Kraftstoff für Verbrennungsmotoren, wobei das Copolymer allein, gemischt oder in Form eines Konzentrats nach Anspruch 9 verwendet wird.

11. Verwendung nach Anspruch 10, wobei das Copolymer im flüssigen Kraftstoff zum Sauberhalten und/oder Reinigen von mindestens einem der inneren Abschnitte des Verbrennungsmotors verwendet wird.

12. Verwendung nach Anspruch 11 zum Senken des Kraftstoffverbrauchs des Verbrennungsmotors.

13. Verwendung nach einem der Ansprüche 11 und 12 zum Senken der Schadstoffemissionen, insbesondere der Partikelemissionen des Verbrennungsmotors.

14. Verwendung nach einem der Ansprüche 11 bis 13, wobei der Verbrennungsmotor ein Fremdzündungsmotor ist.

15. Verwendung einem der Ansprüche 11 bis 13, wobei der Verbrennungsmotor ein Dieselmotor, vorzugsweise ein Dieselmotor mit Direkteinspritzung ist.

## Claims

1. A fuel composition comprising:
(1) a fuel derived from one or more sources chosen from the group consisting of mineral, animal, plant and synthetic sources, and
(2) one or more block copolymers comprising:
- at least one block **A** of formula (I) below: 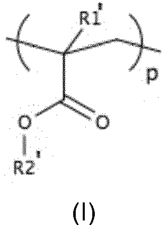 in which
p is an integer ranging from 2 to 100,
R₁^{'} is chosen from hydrogen and a methyl group,
R'₂ is chosen from C₁ to C₃₄ hydrocarbon-based chains,
- at least one block **B** of formula (II) below: 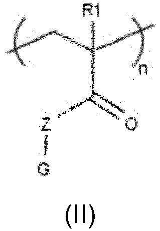 in which
n is an integer ranging from 2 to 40,
R₁ is chosen from hydrogen and a methyl group,
Z is chosen from an oxygen atom and a group -NR'- with R' being chosen from a hydrogen atom and C₁ to C₁₂ hydrocarbon-based chains,
G is a C₁ to C₃₄ hydrocarbon-based chain substituted with at least one quaternary ammonium group and optionally one or more hydroxyl groups.

2. The fuel composition as claimed in claim 1, in which:
- block **A** consists of a chain of structural units derived from an alkyl (meth)acrylate monomer (mₐ), and
- block **B** consists of a chain of structural units derived from an alkyl (meth)acrylate or alkyl(meth)acrylamide monomer (m_{b}), the alkyl radical of which is constituted by a C₁ to C₃₄ hydrocarbon-based chain substituted with at least one quaternary ammonium group and optionally one or more hydroxyl groups.

3. The fuel composition as claimed in claim 2, in which the monomer (mₐ) is chosen from C₁ to C₃₄ alkyl acrylates and C₁ to C₃₄ alkyl methacrylates.

4. The fuel composition as claimed in either of claims 2 and 3, in which the alkyl radical of the monomer (m_{b}) is substituted with at least one quaternary ammonium group and one or more hydroxyl groups.

5. The fuel composition as claimed in any one of claims 1 to 4, in which the quaternary ammonium group is chosen from pyrrolinium, pyridinium, imidazolium, triazolium, triazinium, oxazolium and isoxazolium quaternary salts, trialkylammonium, guanidinium and iminium quaternary salts.

6. The fuel composition as claimed in any one of claims 1 to 5, in which block **B** is represented by one of the formulae (III) and (IV) below: 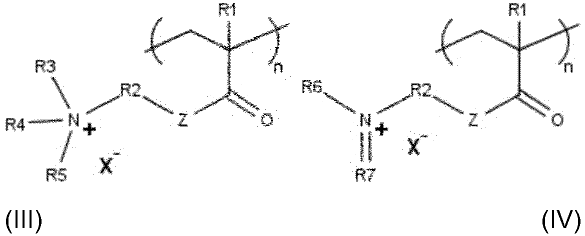 in which
n, Z and R₁ are as defined in claim 1,
X⁻ is chosen from hydroxide and halide ions and organic anions,
R₂ is chosen from C₁ to C₃₄ hydrocarbon-based chains, optionally substituted with at least one hydroxyl group,
R₃, R₄ and R₅ are identical or different and chosen independently from C₁ to C₁₈ hydrocarbon-based chains, it being understood that the alkyl groups R₃, R₄ and R₅ may contain one or more groups chosen from: a nitrogen atom, an oxygen atom and a carbonyl group and that the groups R₃, R₄ and R₅ may be connected together in pairs to form one or more rings,
R₆ and R₇ are identical or different and chosen independently from C₁ to C₁₈ hydrocarbon-based chains, it being understood that the groups R₆ and R₇ may contain one or more groups chosen from: a nitrogen atom, an oxygen atom and a carbonyl group and that the groups R₆ and R₇ may be connected together to form a ring.

7. The fuel composition as claimed in claim 6, in which the group R₂ is represented by one of the formulae (V) and (VI) below: 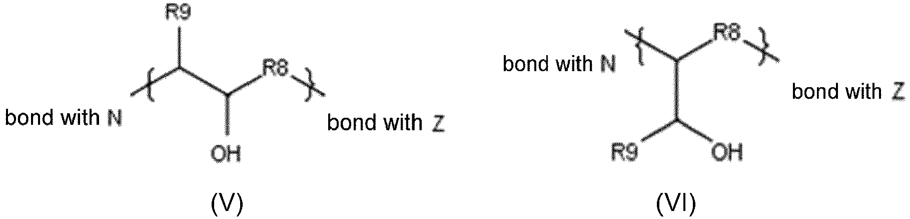 in which
Rs is chosen from C₁ to C₃₂ hydrocarbon-based chains,
R₉ is chosen from hydrogen and C₁ to C₆ alkyl groups.

8. The fuel composition as claimed in any one of claims 1 to 7, in which the copolymer is a copolymer comprising at least one sequence of blocks **AB, ABA** or **BAB** in which said blocks **A** and **B** form a sequence without the presence of an intermediate block of different chemical nature.

9. A fuel concentrate comprising one or more block copolymers as defined in any one of claims 1 to 8, mixed with an organic liquid, said organic liquid being inert with respect to the block copolymer(s) and miscible with said fuel and at least a further fuel additive for internal combustion engine.

10. The use of one or more block copolymers as defined in any one of claims 1 to 8 as detergent additive in a liquid fuel for internal combustion engines, said copolymer being used alone, as a mixture or in the form of a concentrate as defined in claim 9.

11. The use as claimed in claim 10, in which the copolymer is used in the liquid fuel to keep clean and/or to clean at least one of the internal parts of said internal combustion engine.

12. The use as claimed in claim 11 for reducing the fuel consumption of internal combustion engines.

13. The use as claimed in any one of claims 11 and 12 for reducing the pollutant emissions, in particular the particle emissions, of internal combustion engines.

14. The use as claimed in any one of claims 11 to 13, in which the internal combustion engine is a spark ignition engine.

15. The use as claimed in any one of claims 11 to 13, in which the internal combustion engine is a diesel engine, preferably a direct-injection diesel engine.
